# EUROPEAN PATENT APPLICATION

(11) **EP 2 187 668 A1**
(43) Date of publication of application: **19.05.2010**
(21) Application number: 08792193.8
(22) Date of filing: 05.08.2008
(51) Int. Cl.: H04W 4/00, H04W 84/00

(54) **MOBILE COMMUNICATION SYSTEM, MOBILE STATION DEVICE, BASE STATION DEVICE, COMMUNICATION METHOD, AND COMMUNICATION CONTROL METHOD**

(30) Priority: 07.08.2007 JP 2007205688
(71) Applicant: Sharp Kabushiki Kaisha, Osaka-shi, Osaka 545-8522 (JP)
(72) Inventor: UEMURA, Katsunari c/o SHARP KABUSHIKI KAISHA, Osaka-shi, Osaka 545-8522 (JP)
(74) Representative: Müller - Hoffmann & Partner
(86) International application number: PCT/JP2008/063996
(87) International publication number: WO 2009/020109

(57) **Abstract**

A mobile station apparatus acquires handover information when a handover instruction message is received and continues a reception process in a source cell until handover execution time when the handover is determined to be a synchronous handover. When it is handover execution time, the mobile station apparatus follows handover information to perform cell switch control and starts a downlink synchronization establishment process for a target cell. When downlink synchronization establishment has succeeded before the expiration of a handover protection time and when the mobile station apparatus determines that downlink synchronization establishment has succeeded within a downlink synchronization establishment expected time, the mobile station apparatus determines that uplink synchronization establishment is not necessary for the target cell and executes a synchronous handover process that does not require random access. On the other hand, when determining that the downlink synchronization establishment has not succeeded, the mobile station apparatus determines that uplink synchronization establishment is necessary for the target cell and executes a handover process that requires random access transmission.

## Description

### Technical Field

The present invention relates to a mobile communication technique, and particularly, to a control technique of handover in mobile communication.

### Background Art

Currently, Evolved Universal Terrestrial Radio Access (hereinafter, called "EUTRA") is studied in standard organization 3GPP (3rd Generation Partnership Project, see Non-Patent Document 1 below). EUTRA aims to speed up the communication speed by implementing, in a third-generation frequency band, part of techniques studied for fourth-generation.

It is determined in the EUTRA that an OFDMA (Orthogonal Frequency Division Multiplexing Access) system resistant to multipath interference and suitable for high-speed transmission will be implemented as a communication system. As for detailed specifications related to the operations of the upper layers, such as data transfer control and resource management control related to the EUTRA, a technique, which realizes low-delay, low-overhead configurations and which is configured as simple as possible, is being implemented.

In the EUTRA, a control system different from a W-CDMA (Wideband-Code Division Multiple Access) system implemented in a third-generation mobile radio access network ULTRAN (Universal Terrestrial Radio Access Network) is taken into consideration.

For example, in a procedure of handover, a handover that maintains the downlink reception timing (soft handover and timing-maintained hard handover) and a handover that changes the downlink reception timing (timing-reinitialized hard handover) are prepared in the W-CDMA system. Meanwhile, the E-UTRA is different that there is no soft handover, and since the OFDMA is used, an establishment process of uplink synchronization is necessary before the uplink transmission after the handover. Hereinafter, the description of "handover" in the text always denotes a hard handover.

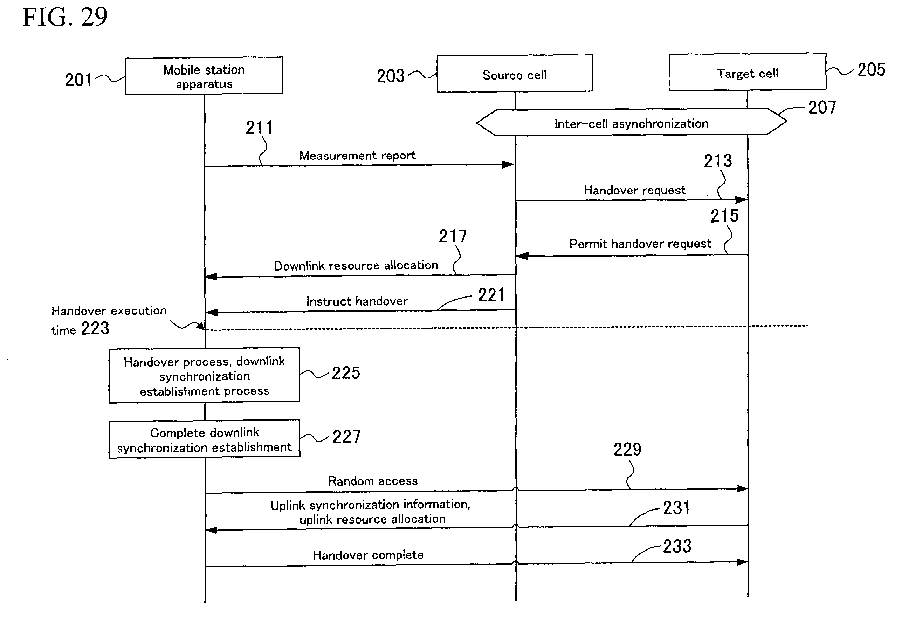

Figure 29 is a diagram for explaining a handover procedure considered in the EUTRA and is a diagram showing a flow of control started from a state that a mobile station apparatus communicates with a handover source cell (hereinafter, called "source cell"), and a handover to a handover target cell (hereinafter, called "target cell") is performed. The source cell and the target cell are not synchronized (inter-cell asynchronization, 207).

Here, a mobile station apparatus 201 notifies a source cell 203 of a measurement result of the reception quality between the source cell 203 and a target cell 205 or a measurement report message including a handover command request (211). When the source cell 203 determines from the content of the measurement report message (211) that a handover to the target cell 205 is necessary, the source cell 203 notifies the necessity of handover in the mobile station apparatus 201 to the target cell 205 by a handover request message 213 to request for the preparation of the handover (213). If the target cell 205 that has received the handover request message (213) determines that the handover can be performed, the target cell 205 notifies a handover request permission message 215 to the source cell 203. The source cell 203 that has received the handover request permission message (215) transmits a downlink resource allocation message 217 and notifies a handover instruction message (also called a handover command in some cases) 221 to the mobile station apparatus 201.

The resource denotes information related to transmission of transmission frequency bandwidth, transmission time, modulation system, signal sequence, and the like. As the mobile station apparatus 201 receives the message, the handover process is carried out (225). If the handover instruction message (221) includes a handover execution time 223, the mobile station apparatus 201 performs the handover after reaching the handover execution time 223. Immediate execution may be designated as the handover execution time 223. The mobile station apparatus 201 switches control parameters of the radio frequency and the transmitting/receiving circuit at the handover execution time 223 and then executes a downlink synchronization establishment process 227 for establishing downlink wireless synchronization with the target cell.

Parameters for the downlink synchronization establishment process 227 are included in the handover instruction message or reported or notified in advance by the source cell 203. The mobile station apparatus 201 completed with the downlink synchronization establishment performs random access transmission to establish uplink synchronization with the target cell (229). Although a (contention-based) channel in which a collision may occur is usually used in the random access 229, a method of allocating in advance, for each mobile station apparatus 201, a preamble (Dedicated Preamble) transmitted by designating a signature in a handover instruction message is proposed for (contention-free) random access transmission in which a collision does not occur (Non-Patent Document 2 below).

The mobile station apparatus 201 uses the preamble constituted by the signature designated by the handover instruction message 221 to perform the random access transmission. The base station apparatus 205 of the target cell that has received the preamble determines that the handover process of the mobile station apparatus 201 is completed and notifies uplink synchronization information for adjusting the uplink transmission timing and uplink resource allocation information for transmitting a handover complete message (also called handover confirm in some cases, 231). The mobile station apparatus 201 adjusts the uplink transmission timing based on the information and uses the designated uplink resource to transmit the handover complete message to the target cell, and the handover is completed (233).

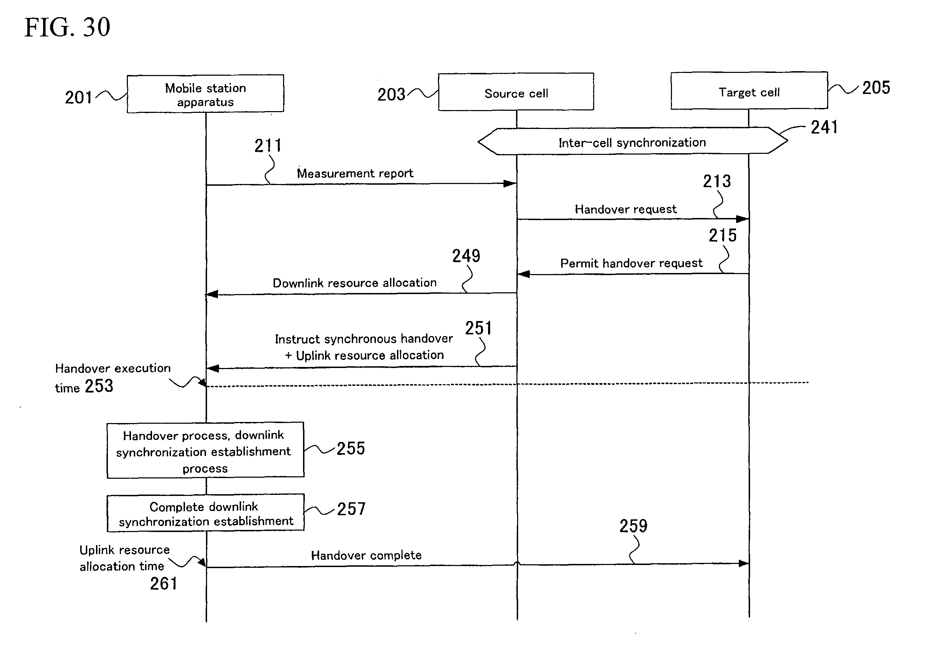

In the EUTRA, when the source cell 203 and the target cell 205 are synchronized, a handover (also called synchronous handover) procedure of switching a wirelessly connected base station apparatus while maintaining the uplink transmission timing of the mobile station apparatus carrying out the handover is considered (Non-Patent Document 3 and Non-Patent Document 4 below). The synchronous handover occurs in a case such as when the source cell 203 and the target cell 205 belong to the same base station apparatus, and the uplink transmission timing of the mobile station apparatus 201 is maintained before and after the handover. Figure 30 is a diagram for explaining a procedure of a synchronous handover process considered in the EUTRA. Since up to the reception of the handover request permission message 215 by the source cell is the same control as in Figure 29, the same reference numerals are used, and the description will not be repeated. The source cell 203 that has received the handover request permission message 215 notifies a downlink resource allocation message 249 and a synchronous handover instruction message 251 to the mobile station apparatus 201. Either the source cell 203 or the target cell 205 may determine whether the handover is a synchronous handover. The synchronous handover instruction message 251 includes uplink resource allocation information for a handover complete message 259. As the mobile station apparatus 201 receives the message, the synchronous handover process is carried out. If the synchronous handover instruction message 251 includes a handover execution time, the mobile station apparatus 201 executes the handover in the handover execution time 253. Immediate execution may be designated as the handover execution time.

The mobile station apparatus 201 switches control parameters of the radio frequency and the transmitting/receiving circuit in the handover execution time 253 and then executes a downlink synchronization establishment process 255 to establish downlink wireless synchronization with the target cell. Parameters for the downlink synchronization establishment process are included in the synchronous handover instruction message 251 or reported or notified in advance by the source cell 203. The mobile station apparatus 201 completed with the downlink synchronization establishment (257) uses the uplink resource designated by the uplink resource allocation information included in the synchronous handover instruction message 251 to transmit the handover complete message 259 to the target cell 205, and the synchronous handover is completed.

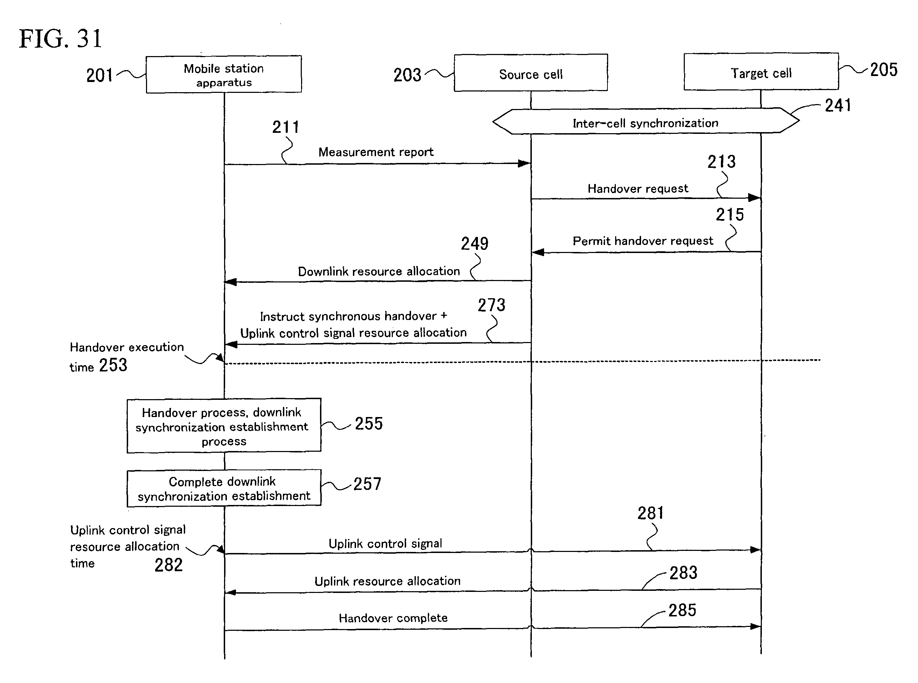

Figure 31 is a diagram showing still another procedure of the synchronous handover procedure. Since up to the reception of the handover request permission message 215 by the source cell 203 is the same as in Figure 30, the same reference numerals are used, and the description will not be repeated. The difference from Figure 30 is that a synchronous handover instruction message 273 includes uplink control signal resource allocation information for transmitting the first uplink control signal after the completion of the handover. The mobile station apparatus 201 completed with the downlink synchronization establishment process (257) uses the uplink resource designated by the uplink control signal resource allocation information included in the synchronous handover instruction message 273 to transmit an uplink control signal 281 at allocate time (282), and the target cell 205 that has received the uplink control signal 281 notifies uplink resource allocation information for a handover complete message (283). The mobile station apparatus then uses the uplink resource designated by the uplink resource allocation information to transmit a handover complete message 285, and the synchronous handover is completed.

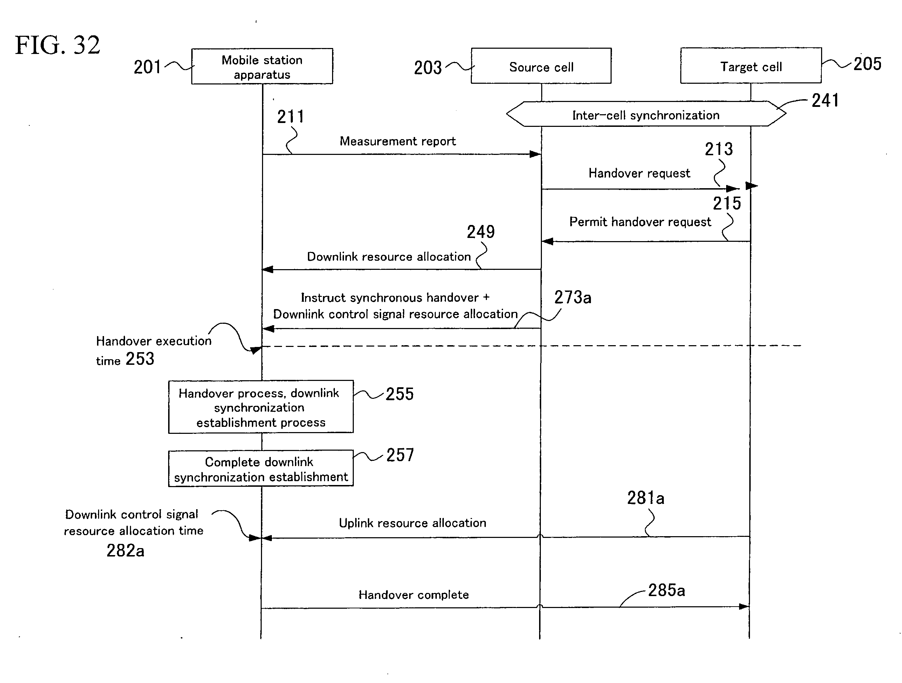

Figure 32 is a diagram showing another procedure of the synchronous handover procedure. Since up to the reception of the handover request permission message 215 by the source cell is the same as in Figure 30, the same reference numerals are used, and the description will not be repeated. The difference from Figure 30 is that a synchronous handover instruction message 273a includes downlink control signal resource allocation information for a downlink control signal 281a received after the completion of the handover. In this case, the handover instruction message may not include the downlink control signal resource allocation information, and the mobile station apparatus may autonomously detect the downlink control signal transmitted by the target cell at arbitrary timing. The mobile station apparatus completed with the downlink synchronization establishment process (257) attempts at designated downlink control signal resource allocation time 282a to receive the downlink control signal 281a including the uplink resource allocation information transmitted by the target cell 205. The mobile station apparatus that has received the downlink control signal 281 a uses the uplink resource designated by the uplink resource allocation information to transmit a handover complete message 285a to the target cell 205, and the synchronous handover is completed.

In this way, the synchronous handover procedure can skip the random access transmission to establish the uplink synchronization after the completion of the downlink synchronization establishment. Therefore, a high-speed handover procedure can be realized without a delay in retransmission control and the like associated with the random access.
Non-Patent Document 1: 3GPP TS36.300 V8.0.0 (2007-3), Overall discription; Stage2, http://www.3gpp.org/ft/Specs/html-info/36300.htm
Non-Patent Document 2: Nokia, "Non contention based HO", 3GPP TSG RAN WG2#56bis, 15-19 January, 2007, Sorrento, Italy, R2-070011
Non-Patent Document 3: Nokia, NSN, "Synchronised Flandover", 3GPP TSG RAN WG2#58, 7-11 May, 2007, Kobe, Japan, R2-071864
Non-Patent Document 4: Nortel, "Inter eNB handover in a synchronous network", 3GPP TSG RAN WG2#58, 7-11 May, 2007, Kobe, Japan, R2-071978

### Disclosure of the Invention

### Problems to be Solved by the Invention

However, there is a problem that the control procedure of the mobile station apparatus and the base station apparatus is not clear when the downlink synchronization establishment time in the target cell is a long time, and the time for uplink or downlink resource allocation allocated in advance to transmit the handover complete message or the schedule request has passed in the synchronous handover procedure described above. Thus, this means that the time for allocating the uplink or downlink resource is set equal to the maximum allowable time required by the mobile station apparatus to establish the downlink synchronization, and there is a problem that the delay time until the transmission of the handover complete message is extended. There is also a problem that the time for maintaining the uplink synchronization is not taken into consideration. There is also a problem that the control procedure is not clear when the signal transmitted at the time of uplink or downlink resource allocation cannot be received. Furthermore, there is a problem that the control procedure of the mobile station apparatus is not clear when the handover execution time is designated, and the handover instruction message is received after the designated handover execution time.

### Means for Solving the Problems

An aspect of the present invention provides a mobile station apparatus in a mobile communication system comprising: a base station apparatus; and the mobile station apparatus, wherein when a handover for switching a wirelessly connected base station apparatus is performed while uplink transmission timing of the mobile station apparatus is maintained, the mobile station apparatus performs a handover by selecting a procedure from a first handover procedure that transmits a random access channel to a handover target base station apparatus and a second handover procedure that does not require the transmission of the random access channel based on the time required to establish downlink synchronization with the handover target base station apparatus and not less than one control time information transmitted from a handover source base station apparatus using a handover instruction message.

Furthermore, the present invention provides a base station apparatus in a mobile communication system comprising: a base station apparatus; and the mobile station apparatus, wherein whether to perform a handover of switching the wirelessly connected base station apparatus while maintaining uplink transmission timing of the mobile station apparatus is determined based on a state of the mobile station apparatus and a state of an uplink resource of the handover target base station apparatus.

Another aspect of the present invention provides a control method in a mobile station apparatus included in a mobile communication system comprising: a base station apparatus; and the mobile station apparatus, the control method comprising: when performing a handover of switching a wirelessly connected base station apparatus while maintaining uplink transmission timing with a handover source base station apparatus, a step of performing a handover by selecting a procedure from a first handover procedure that transmits a random access channel to a handover target base station apparatus and a second handover procedure that does not require the transmission of the random access channel based on the time required to establish Downlink synchronization with the handover target base station apparatus.

Furthermore, provided is a mobile communication system comprising: a base station apparatus; and a mobile station apparatus, the mobile station apparatus comprising: a handover management unit that compares a time at the completion of downlink synchronization establishment and an uplink resource allocation time allocated in advance; and a handover control unit that performs a first handover procedure that transmits a random access channel if the time at the completion of the downlink synchronization establishment is later than the uplink resource allocation time and that performs a second handover procedure that does not require the transmission of the random access channel if the time at the completion of the downlink synchronization establishment is before the uplink resource allocation time, and the base station apparatus comprising: a base station handover management unit that determines the possibility of execution of the second handover procedure; and a base station handover control unit that switches the first handover procedure and the second handover procedure in accordance with the base station handover management unit.

Furthermore, provided is a mobile communication system comprising: a base station apparatus; and a mobile station apparatus, the mobile station apparatus comprising: a handover management unit that compares a time at the completion of downlink synchronization establishment, an uplink resource allocation time allocated in advance, and an uplink synchronization maintenance time; and a handover control unit that performs a first handover procedure that transmits a random access channel if the time at the completion of the downlink synchronization establishment is later than the uplink resource allocation time or the uplink synchronization maintenance time and that performs a second handover procedure that does not require the transmission of the random access channel if the time at the completion of the downlink synchronization establishment is before the uplink resource allocation time and the uplink synchronization maintenance time, and the base station apparatus comprising: a base station handover management unit that determines the possibility of execution of the second handover procedure; and a base station handover control unit that switches the first handover procedure and the second handover procedure in accordance with the base station handover management unit.

The present invention may provide a mobile communication system comprising: a base station apparatus; and a mobile station apparatus, the mobile station apparatus comprising: a handover management unit that determines a handover execution time by comparing a handover execution time and a reception time of a handover instruction message and that compares a time at the completion of downlink synchronization establishment, an uplink resource allocation time allocated in advance, and an uplink synchronization maintenance time; and a handover control unit that performs a first handover procedure that transmits a random access channel if the time at the completion of the downlink synchronization establishment is later than the uplink resource allocation time or the uplink synchronization maintenance time and that performs a second handover procedure that does not require the transmission of the random access channel if the time at the completion of the downlink synchronization establishment is before the uplink resource allocation time and the uplink synchronization maintenance time, and the base station apparatus comprising: a base station handover management unit that determines the possibility of execution of the second handover procedure; and a base station handover control unit that switches the first handover procedure and the second handover procedure in accordance with the base station handover management unit.

Furthermore, provided is a mobile station apparatus in a mobile communication system comprising: a base station apparatus; and the mobile station apparatus, wherein when a handover for switching a wirelessly connected base station apparatus is performed while uplink transmission timing of the mobile station apparatus is maintained, the mobile station apparatus performs a handover by selecting a procedure from a first handover procedure that transmits a contention-free random access channel to a handover target base station apparatus, a second handover procedure that transmits a contention-based random access channel, and a third handover procedure that does not require the transmission of the random access channel based on the time required to establish downlink synchronization with the handover target base station apparatus and first and second resource allocation time information transmitted from a handover source base station.

Furthermore, provided is a base station apparatus in a mobile communication system comprising: the base station apparatus; and a mobile station apparatus, wherein when instructing a handover for switching a wirelessly connected base station apparatus while maintaining uplink transmission timing of the mobile station apparatus, the base station apparatus sets, in a handover instruction message, control time information indicating an uplink resource allocation time and an allocation time of a Downlink control signal for notifying a signature based on a state of the mobile station apparatus and a state of an uplink resource of the handover target base station apparatus.

Furthermore, provided is a control method in a mobile station apparatus included in a mobile communication system comprising: a base station apparatus; and the mobile station apparatus, the control method comprising: when performing a handover of switching a wirelessly connected base station apparatus while maintaining uplink transmission timing with a handover source base station apparatus, a step of performing a handover by selecting a procedure from a first handover procedure that transmits a contention-free random access channel to a handover target base station apparatus, a second handover procedure that transmits a contention-based random access channel, and a third handover procedure that does not require the transmission of a random access channel based on the time required to establish downlink synchronization with the handover target base station apparatus.

Furthermore, the present invention may provide a mobile communication system comprising: a base station apparatus; and a mobile station apparatus, the mobile station apparatus comprising: a handover management unit that compares a time at the completion of Downlink synchronization establishment and an uplink resource allocation time allocated in advance; and a handover control unit that performs a first handover procedure that transmits a contention-free random access channel and a second handover procedure that transmits a contention-based random access channel if the time at the completion of the downlink synchronization establishment is after first and second uplink resource allocation times, respectively, and that performs a third handover procedure that does not require the transmission of a random access channel if the time at the completion of the downlink synchronization establishment is before the uplink resource allocation times, and the base station apparatus comprising: a base station handover management unit that determines the possibility of execution of the third handover procedure; and a base station handover control unit that switches the first and second handover procedures and the third handover procedure in accordance with the base station handover management unit.

Provided is a mobile station apparatus in a mobile communication system comprising: a base station apparatus; and the mobile station apparatus, wherein when a handover for switching a wirelessly connected base station apparatus is performed while uplink transmission timing of the mobile station apparatus is maintained, the mobile station apparatus performs a handover by selecting a procedure from a first handover procedure that transmits a random access channel to a handover target base station apparatus and a second handover procedure that does not require the transmission of the random access channel based on a time required to establish downlink synchronization with the handover target base station apparatus and not less than one control time information transmitted from a handover source base station apparatus using a handover instruction message, switches the handover procedure to the first handover procedure if there is no confirmation of reception from the handover target base station apparatus in response to the transmission of a handover complete message based on the second handover procedure, and performs the first handover procedure.

Furthermore, provided is a control method in a mobile station apparatus included in a mobile communication system comprising: a base station apparatus; and the mobile station apparatus, the control method comprising: when performing a handover of switching a wirelessly connected base station apparatus while maintaining uplink transmission timing with a handover source base station apparatus, a step of performing a handover by selecting a procedure from a first handover procedure that transmits a random access channel to a handover target base station apparatus and a second handover procedure that does not require the transmission of the random access channel based on a time required to establish downlink synchronization with the handover target base station apparatus; and a step of switching the handover procedure to the first handover procedure if there is no confirmation of reception from the handover target base station apparatus in response to the transmission of a handover complete message based on the second handover procedure and performing the first handover procedure.

Furthermore, the present invention may provide a mobile communication system comprising: a base station apparatus; and a mobile station apparatus, the mobile station apparatus comprising: a handover management unit that compares a time at the completion of downlink synchronization establishment and an uplink resource allocation time allocated in advance; and a handover control unit that performs a first handover procedure that transmits a random access channel if the time at the completion of the downlink synchronization establishment is after the uplink resource allocation time, performs a second handover procedure that does not require the transmission of the random access channel if the time at the completion of the downlink synchronization establishment is before the uplink resource allocation time, and switches the handover procedure to the first handover procedure if there is no confirmation of reception from the handover target base station apparatus in response to the transmission of a handover complete message based on the second handover procedure to perform the first handover procedure, and the base station apparatus comprising: a base station handover management unit that determines the possibility of execution of the second handover; and a base station handover control unit that switches the first handover procedure and the second handover procedure in accordance with the base station handover management unit.

The present invention may provide a mobile station apparatus in a mobile communication system comprising: a base station apparatus; and the mobile station apparatus, wherein when a handover for switching a wirelessly connected base station apparatus is performed while uplink transmission timing of the mobile station apparatus is maintained, the mobile station apparatus performs a handover by selecting a procedure from a first handover procedure that transmits a random access channel to a handover target base station apparatus and a second handover procedure that does not require the transmission of the random access channel based on a time required to establish downlink synchronization with the handover target base station apparatus and not less than one control time information transmitted from a handover source base station apparatus using a handover instruction message, switches the handover procedure to the first handover procedure if the reception of a downlink control signal based on the second handover procedure fails after the downlink synchronization establishment with the handover target base station apparatus is completed, and performs the first handover procedure.

The present invention may provide a control method in a mobile station apparatus included in a mobile communication system comprising: a base station apparatus; and the mobile station apparatus, the control method comprising: when performing a handover of switching a wirelessly connected base station apparatus while maintaining uplink transmission timing with a handover source base station apparatus, a step of performing a handover by selecting a procedure from a first handover procedure that transmits a random access channel to a handover target base station apparatus and a second handover procedure that does not require the transmission of the random access channel based on a time required to establish downlink synchronization with the handover target base station apparatus, wherein the handover procedure is switched to the first handover procedure if the reception of a downlink control signal based on the second handover procedure fails after the Downlink synchronization establishment with the handover target base station apparatus is completed, and the first handover procedure is executed.

Furthermore, the present invention may provide a mobile communication system comprising: a base station apparatus; and a mobile station apparatus, the mobile station apparatus comprising: a handover management unit that compares a time at the completion of downlink synchronization establishment and an uplink resource allocation time allocated in advance; and a handover control unit that performs a first handover procedure that transmits a random access channel if the time at the completion of the downlink synchronization establishment is after the uplink resource allocation time, performs a second handover procedure that does not require the transmission of the random access channel if the time at the completion of the Downlink synchronization establishment is before the uplink resource allocation time, and switches the handover procedure to the first handover procedure if the reception of a downlink control signal based on the second handover procedure fails after the completion of the downlink synchronization establishment with the base station apparatus after the handover to perform the first handover procedure, and the base station apparatus comprising: a base station handover management unit that determines the possibility of execution of the second handover procedure; and a base station handover control unit that switches the first handover procedure and the second handover procedure in accordance with the base station handover management unit.

### Advantage of the Invention

According to the present invention, an optimal handover procedure can be selected based on a comparison between the time to the Downlink synchronization establishment and the uplink resource allocation time in a synchronous handover procedure, and the handover performance improves.

### Brief Description of the Drawings

Figure 1 is a diagram showing a radio resource partitioned by frequency domains and time domains in EUTRA.
Figure 2 is a block diagram showing an example of configuration of a mobile station apparatus according to Example 1 of the present invention.
Figure 3 is a block diagram showing an example of configuration of a base station apparatus according to Example 1 of the present invention.
Figure 4 is a flow chart diagram showing an example of a control flow of a mobile station apparatus related to a synchronous handover according to Example 1 of the present invention.
Figure 5 is a sequence diagram showing an example when a synchronous handover is carried out according to Example 1 of the present invention.
Figure 6 is a sequence diagram showing an example when a synchronous handover is not carried out according to Example 1 of the present invention.
Figure 7 is a flow chart diagram showing another example of a control flow of the mobile station apparatus related to a synchronous handover according to Example 1 of the present invention.
Figure 8 is a flow chart diagram showing an example of a control flow for determining a handover procedure in the base station apparatus according to Example 1 of the present invention.
Figure 9 is a block diagram showing an example of configuration of a mobile station apparatus according to Example 2 of the present invention.
Figure 10 is a block diagram showing an example of configuration of a base station apparatus according to Example 2 of the present invention.
Figure 11 is a flow chart diagram showing an example of a control flow of the mobile station apparatus of a synchronous handover according to Example 2 of the present invention.
Figure 12 is a sequence diagram showing an example when a synchronous handover is carried out according to Example 2 of the present invention.
Figure 13 is a sequence diagram showing an example when a synchronous handover is not carried out according to Example 2 of the present invention.
Figure 14 is a diagram showing another example of a control flow of the mobile station apparatus of a synchronous handover according to Example 2 of the present invention.
Figure 15 is a flow chart diagram showing an example of a control flow for the base station apparatus to determine a handover procedure according to Example 2 of the present invention.
Figure 16 is a sequence diagram of a synchronous handover procedure accompanied by an uplink resynchronization request process according to Example 2 of the present invention.
Figure 17 is a flow chart diagram showing an example of a control flow for the base station apparatus to determine a handover procedure according to Example 2 of the present invention.
Figure 18 is a block diagram showing an example of configuration of a mobile station apparatus according to Example 3 of the present invention.
Figure 19 is a sequence diagram showing an example when a synchronous handover is carried out according to Example 3 of the present invention.
Figure 20 is a flow chart diagram showing an example of a control flow of a mobile station apparatus related to a synchronous handover according to Example 4 of the present invention.
Figure 21 is a sequence diagram showing an example of a relationship between resource allocation times according to Example 4 of the present invention.
Figure 22 is a sequence diagram showing an example when a synchronous handover is carried out according to Example 4 of the present invention.
Figure 23 is a sequence diagram showing an example when a synchronous handover is not carried out according to Example 4 of the present invention.
Figure 24 is a sequence diagram showing another example when a synchronous handover is not carried out according to Example 4 of the present invention.
Figure 25 is a flow chart diagram showing an example of a control flow of a mobile station apparatus after a synchronous handover is carried out according to Example 5 of the preset invention.
Figure 26 is a sequence diagram showing an example when a random access transmission is performed after a synchronous handover is carried out according to Example 5 of the present invention.
Figure 27 is a flow chart diagram showing an example of a control flow after the completion of downlink synchronization establishment according to Example 6 of the present invention.
Figure 28 is a sequence diagram showing an example when a synchronous handover is not carried out according to Example 6 of the present invention.
Figure 29 is a sequence diagram showing a general handover procedure.
Figure 30 is a sequence diagram showing a general synchronous hanover procedure.
Figure 31 is another sequence diagram showing a general synchronous handover procedure.
Figure 32 is another sequence diagram showing a general synchronous handover procedure.

### Description of Symbols

1...mobile station apparatus, 3...receiving unit, 5...scheduling unit, 7...channel demodulating unit, 9...data processing unit, 11...control signal processing unit, 15...channel measuring unit, 17...encoding unit, 21...random access control unit, 23...channel modulating unit, 25...transmission power control unit, 27...transmitting unit, 31...handover control unit, 33...handover management unit, 35...downlink synchronization management unit, 37...upper layer, 41...base station apparatus, 43...receiving unit, 45...schduling unit, 47...data processing unit, 51...control signal processing unit, 53...channel measuring unit, 55...encoding unit, 56...channel modulating unit, 61...transmission power control unit, 63...transmitting unit, 65...base station handover control unit, 67...base station handover management unit, 68... upper layer

### Best Mode for Carrying Out the Invention

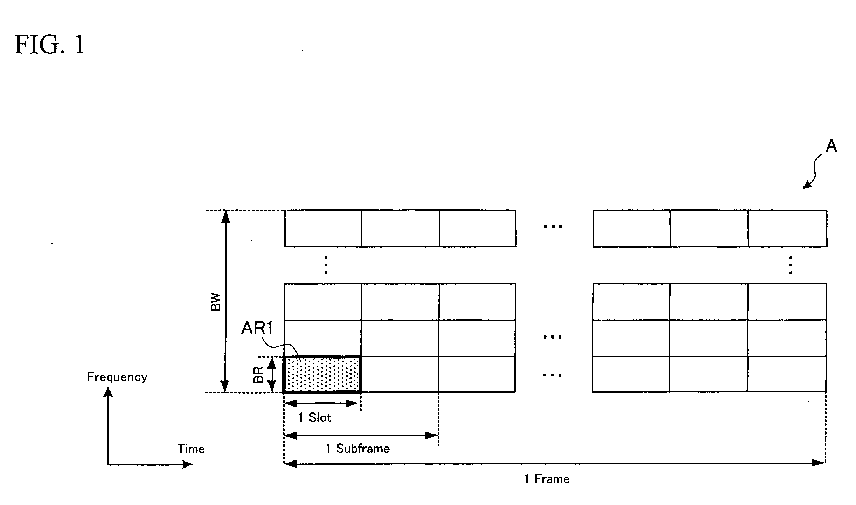

Figure 1 is a diagram showing an example of configuration of a radio frame used in a communication technique according to Example of the present invention. In Figure 1, the horizontal axis denotes a time axis, and the vertical axis denotes a frequency axis. In a radio frame A, an area constituted by a certain frequency domain (BR) constituted by a set of a plurality of subcarriers on the frequency axis and a certain transmission time interval (slot) serves as one unit AR1.

A transmission time interval constituted by slots of an integral multiple (twofold in Figure 1) of one slot will be called a subframe. Furthermore, a set of a plurality of subframes will be called a frame. Figure 1 shows a configuration that two slots constitute one subframe. The domain partitioned by the certain frequency domain (BR) and one slot length will be called a resource block. In Figure 1, BW indicates a system bandwidth, and BR indicates a bandwidth of the resource block.

Next, physical channels used in the examples of the present invention and the roles of the physical channels will be described. Physical channels are classified into data channels and control channels. The control channels include a synchronization channel, a broadcast channel, a random access channel, a downlink reference signal, an uplink reference signal, a downlink shared control channel, and an uplink shared control channel. Among these, physical channels related to the present invention will be described.

The synchronization channel is a downlink channel transmitted in a known signal pattern by a base station apparatus for a mobile station apparatus to wirelessly synchronize with the base station apparatus. The synchronization channels include a primacy synchronization channel used for timing synchronization and a secondary synchronization channel used for frame synchronization and cell identification. Although the synchronization channel is called Synchronization Signal in some cases, the meanings are the same.

The broadcast channel is a downlink channel not for a specific mobile station apparatus, but for the transmission of information (broadcast information) commonly used by mobile station apparatuses located in a certain area. The mobile station apparatus acquires information and the like of the base station apparatuses through the broadcast channel.

The random access channel is an uplink channel used for uplink transmission when an uplink resource used by the mobile station apparatus is not scheduled. The random access channel comprises a signal called a preamble constituted by a signature used by the base station apparatus to identify the mobile station apparatus.

The downlink reference signal is a downlink signal for the mobile station apparatus to measure the downlink reception quality. The mobile station apparatus measures EUTRA Carries RSSI (Received Signal Strength Indicator), RSRP (Reference Signal Received Power), and quality information indicator (Channel Quality indicator, CQI) for the downlink reception quality. The RSSI and the RSRP are transmitted as measurement report messages through the uplink data channel. The uplink shared control channel is used to transmit the CQI to the base station apparatus. The base station apparatus performs Downlink scheduling for the mobile station apparatus based on the CQI notified from the mobile station apparatus.

The uplink reference signal is a channel for the base station apparatus to measure the uplink reception quality. The base station apparatus performs uplink scheduling based on the uplink reception quality. The uplink reference signal is also used as a reference signal for demodulating a signal transmitted using the uplink data channel after variations in the amplitude, phase, and frequency of the uplink data channel are calculated.

The downlink shared control channel (Physical Downlink Control Channel: PDCCH) is a downlink channel transmitted from the base station apparatus to the mobile station apparatus. The base station apparatus uses the downlink shared control channel to notify transmission timing information, schedule information (uplink and downlink resource allocation information), and transmission power control information to the mobile station apparatus.

The uplink shared control channel (Physical Uplink Control Channel: PUCCH) is an uplink channel used to transmit a signal from the mobile station apparatus to the base station apparatus. The mobile station apparatus uses the uplink shared control channel to notify a quality information indicator (CQI and the like), HARQ (Hybrid Auto Repeat Request: Hybrid ARQ), ACK/NACK (Acknowledge/Not Acknowledge), an uplink resource request, and the like to the base station apparatus.

### [Example 1]

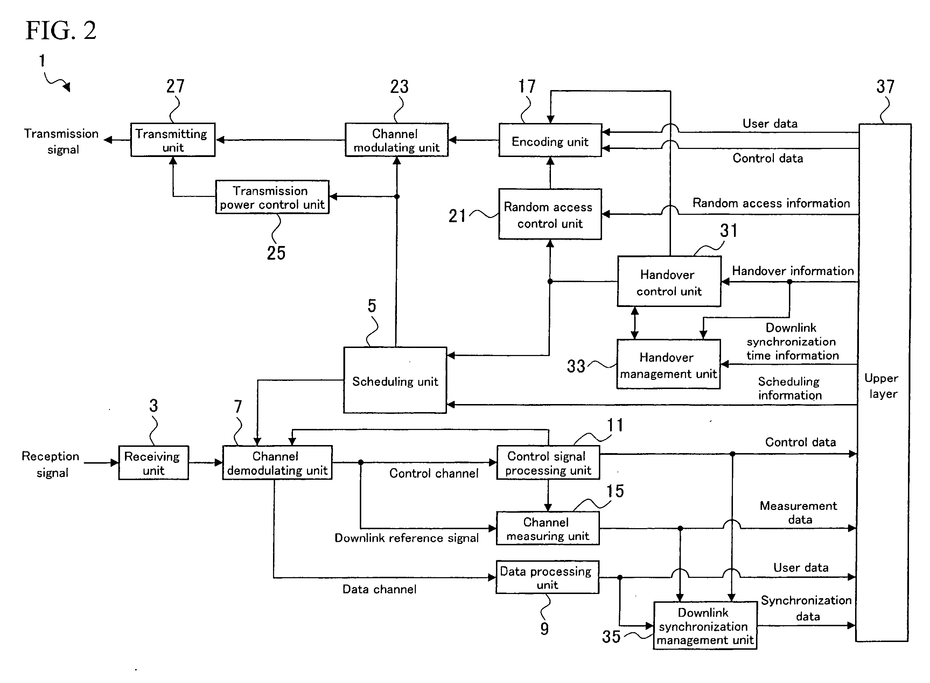

Example 1 of the present invention will be described with reference to the drawings. Figure 2 is a functional block diagram showing an example of configuration of a mobile station apparatus according to Example 1 of the present invention. A mobile station apparatus 1 according to the present Example comprises a receiving unit 3, a scheduling unit 5, a channel demodulating unit 7, a data processing unit 9, a control signal processing unit 11, a channel measuring unit 15, an encoding unit 17, a random access control unit 21, a channel modulating unit 23, a transmission power control unit 25, a transmitting unit 27, a handover control unit 31, a handover management unit 33, a downlink synchronization management unit 35, and an upper layer 37.

The receiving unit 3 receives a reception signal (transmission signal from the base station apparatus). The reception signal is transmitted to the channel demodulating unit 7, demodulated based on scheduling information inputted from the scheduling unit 5, and classified into data channel or control channel. As for the classified channels, a data channel is transmitted to the data processing unit 9, and a control channel is transmitted to the control signal processing unit 11. A downlink reference signal among the control channels is transmitted to the channel measuring unit 15. The data processing unit 9 extracts and transmits user data to the upper layer.

The control signal processing unit 11 extracts and transmits control data to the upper layer. The scheduling information included in the control channel is transmitted to the scheduling unit 5. The channel measuring unit 15 measures the reception quality of a downlink reference signal and transmits the result as measurement data to the upper layer 37. Data for Downlink synchronization is inputted to the downlink synchronization management unit 35 through the channels. Downlink reception powder, reception quality, block error rate, and the like are used as the data for downlink synchronization. The downlink synchronization management unit 35 determines the downlink synchronization state of the mobile station apparatus based on the data for downlink synchronization and transmits the determination result to the upper layer 37 as synchronization data.

The upper layer 37 outputs scheduling information including transfer and reception timing, multiplex method, modulation or demodulation information related to the uplink physical channels and the downlink physical channels to the scheduling unit 5.

Meanwhile, the user data and the control data are outputted from the upper layer 37 to the encoding unit 17 and encoded as transmission data. The control data includes data of the uplink reference signal and the uplink shared control channel. During the transmission of a random access channel, random access information necessary for the random access control unit 21 is inputted, and the encoding unit 17 encodes the data after the signature is selected. The transmission data encoded by the encoding unit 17 is inputted to the channel modulating unit 23. When a handover instruction is notified from the base station apparatus, the upper layer 37 outputs handover information to the handover control unit 31 and the handover management unit 33. The handover information indicates target cell information, handover execution time, uplink resource allocation information, and the like included in the handover instruction message. Information related to timing, such as execution time of handover and uplink resource allocation time, is inputted to the handover management unit 33, and other information is inputted to the handover control unit 31. When the downlink synchronization establishment to the target cell is completed, the time information is inputted to the handover management unit 33 as downlink synchronization time information. The handover management unit 33 manages inputted time information (handover execution time, maximum allowable time of handover, Downlink synchronization time information, and uplink resource allocation time) and controls the handover control unit 31 to perform an appropriate handover procedure described below in accordance with the correspondence relationship between the time information. The hanover control unit 31 follows an instruction from the handover management unit 33 and outputs handover control information necessary for the instructed handover procedure to appropriate blocks (encoding unit 17, random access control unit 21, and scheduling unit 5). The channel modulating unit 23 executes a modulation process in accordance with an appropriate modulation system corresponding to the transmission data inputted by the scheduling unit 5 and performs mapping for physical channels. The transmission power control unit 25 follows an instruction of the scheduling unit 5 and performs appropriate power control for the physical channels. The data modulated by the channel modulating unit 23 is inputted to the transmitting unit 27, and the transmission power control unit 25 controls the power to transmit the data. Other constituent elements of the mobile station apparatus are not feature parts of the present invention and will not be described. The upper layer 37 comprehensively controls the operations of the blocks to perform the procedures described below.

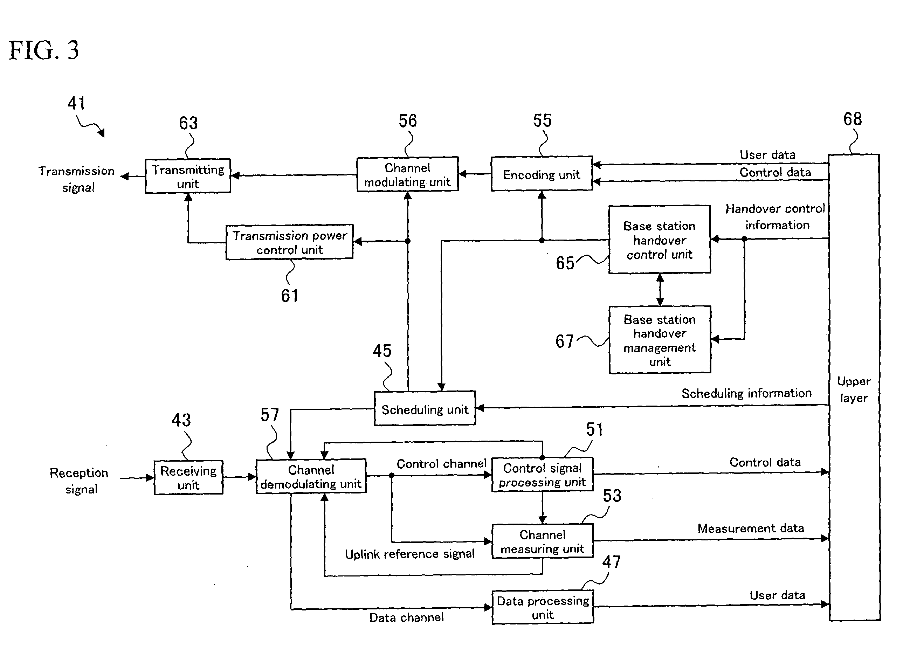

Figure 3 is a block diagram showing an example of configuration of a base station apparatus in a communication technique according to the present Example. The base station apparatus 41 comprises a receiving unit 43, a scheduling unit 45, a data processing unit 47, a control signal processing unit 51, a channel measuring unit 53, an encoding unit 55, a channel modulating unit 56, a channel demodulating unit 57, a transmission power control unit 61, a transmitting unit 63, a base station handover control unit 65, a base station handover management unit 67, and an upper layer 68.

The receiving unit 43 receives a reception signal (transmission signal from the mobile station apparatus and the base station apparatus). The reception signal is transmitted to the channel demodulating unit 57 and classified into data channel and control channel based on scheduling information inputted from the scheduling unit 45. As for the classified channels, a data channel is transmitted to the data processing unit 47, and a control channel is transmitted to the control signal processing unit 51. An uplink reference signal among the control channels is transmitted to the channel measuring unit 53. The data processing unit 47 executes a decoding process of user data and transmits the user data to the upper layer 68. The control signal processing unit 51 extracts control data and transmits the control data to the upper layer 68. Control data related to the channel demodulating unit 57 and the data processing unit 47 is transmitted to the blocks. The channel measuring unit 53 measures the uplink reception quality from an uplink reference signal and transmits measurement data to the upper layer. When the uplink reference signal is used as reference data for channel demodulation, correction information of phase and amplitude of the uplink signal is generated based on the uplink reference signal and fed back to the channel demodulating unit 57. The upper layer 68 determines a data multiplex method, a resource allocation method, and the like of a plurality of mobile station apparatuses and outputs the methods to the scheduling unit 45 as scheduling information.

Meanwhile, responsive to a transmission request from the upper layer 68, the user data and the control data are outputted to the encoding unit 55. The control data includes a synchronization channel, a broadcast channel, a downlink reference signal, and a downlink shared control channel. The user data and the control data encoded by the encoding unit 55 are outputted to the channel modulating unit 56. When transmitting a handover instruction to the mobile station apparatus, the upper layer 68 outputs handover control information to the base station handover control unit 65 and the base station handover management unit 67. The handover control information includes target cell information, handover execution time, uplink resource allocation information, and the like. Information related to timing, such as handover execution time and uplink resource allocation time, is outputted to the base station handover management unit 67, and other information is outputted to the base station handover control unit 65. The information is common to the source cell and the target cell. The base station handover management unit 67 determines whether the synchronous handover is possible based on the timing information such as handover execution time and uplink resource time information. The base station handover management unit 67 also controls the base station handover control unit 65 in accordance with the handover procedure of the mobile station apparatus. The base station handover control unit 65 follows the base station handover management unit 67 to output information (uplink synchronization information and uplink resource allocation information) necessary for the mobile station apparatus to the encoding unit 55 and outputs scheduling information to the scheduling unit 45. The channel modulating unit 56 follows the scheduling information transmitted from the scheduling unit 45 to determine a mobile station apparatus that will receive data, apply a modulation process to the transmission data corresponding to the mobile station apparatus by an appropriate modulation system, and map the physical channels. The transmission power control unit 61 follows an instruction of the scheduling unit 45 and performs appropriate power control of the physical channels. The data modulated by the channel modulating unit 56 is outputted to the transmitting unit 63, and the transmission power control unit 61 controls the power to transmit the data. Other constituent elements of the base station apparatus are not feature parts and will not be described. The upper layer 68 comprehensively controls the operations of the blocks to execute the procedures described below.

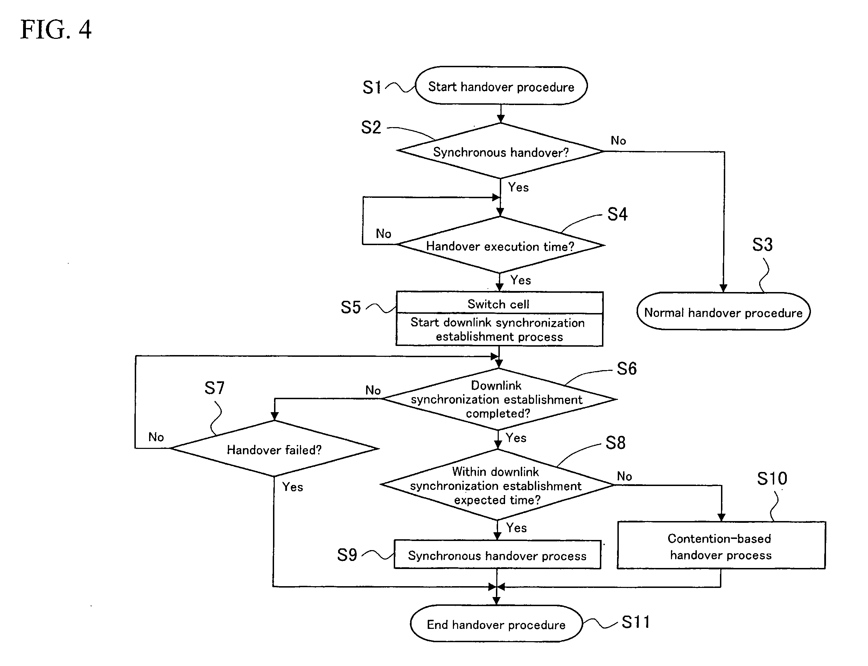

Figure 4 is a flow chart diagram showing a flow of a process of a synchronous handover procedure of a mobile station apparatus according to Example 1 of the present invention. A handover procedure starts in step S1, and when a handover instruction message is received, the mobile station apparatus acquires handover information from the message. The handover information is information including information indicating whether the handover is a synchronous handover, handover execution time, target cell information, handover protection time, and uplink resource allocation information. The handover protection time is the maximum allowable time for the synchronization with the target cell. and if the handover protection time has expired, the mobile station apparatus determines that the handover has failed. The uplink resource allocation information is resource information necessary for the mobile station apparatus to perform uplink transmission to the target cell after the synchronous handover. The time difference between the handover execution time and the transmission time designated by the uplink resource allocation information will be called a downlink synchronization establishment expected time. The downlink synchronization establishment expected time is a predicted time necessary for the mobile station apparatus to synchronize with the target cell. The downlink synchronization establishment expected time may be adaptively determined considering the mobile station performance of the mobile station apparatus, the downlink reception quality during handover, the movement speed, and the like, or may be defined in advance. The handover protection time is equal to or greater than the downlink synchronization establishment expected time. Returning to Figure 4, whether the handover is a synchronous handover is determined from the handover information in step S2. If the handover is not a synchronous handover (No in step S2), the mobile station apparatus performs a normal handover procedure accompanied by random access transmission after the completion of the handover (step S3). The details of the procedure are commonplace and will not be described. If the handover is a synchronous handover (Yes in step S2), whether it is handover execution time is determined (step S4).

If the handover execution time is designated, the reception process in the source cell is continued until the handover execution time (No in step S4). If the immediate execution is designated, the reception time of a handover instruction message is assumed to be the handover execution time. At the handover execution time (Yes in step S4), the mobile station apparatus follows the handover information to perform cell switch control, terminates transmission and reception to and from the source cell, and then starts a downlink synchronization establishment process for the target cell (step S5). Whether the downlink synchronization is established is checked at predetermined intervals (for example, every subframe). If the downlink synchronization establishment is not established (No in step S6) and the predetermined handover protection time has expired, it is determined as a handover failure (Yes in step S7), and the handover process ends (step S11). If the handover protection time has not expired, the downlink synchronization establishment process continues. If the downlink synchronization establishment is successful (Yes in step S6), whether the downlink synchronization establishment has succeeded within the downlink synchronization establishment expected time is determined (step S8). If the downlink synchronization establishment has succeeded within the downlink synchronization establishment expected time (Yes in step S8), it is determined that uplink synchronization establishment is not necessary for the target cell, and a synchronous handover process that does not require random access is executed (step S9). On the other hand, if the downlink synchronization establishment is beyond the downlink synchronization establishment expected time (No in step S8), it is determined that the uplink synchronization establishment is necessary for the target cell, and a contention-based handover process that requires adjustment of the uplink transmission timing by random access transmission is executed (step S10). The process ends in either case (step S11).

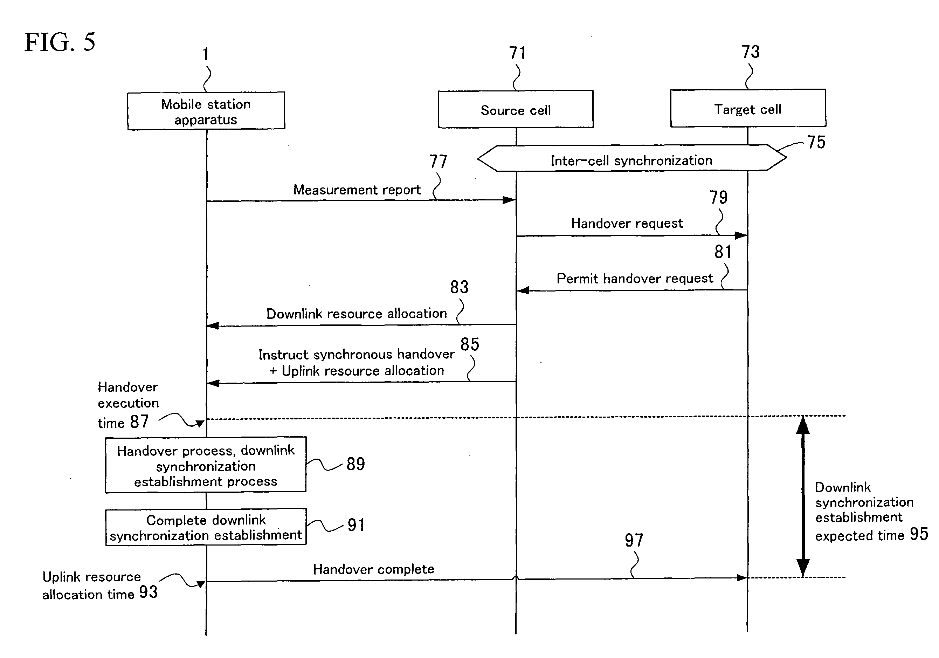

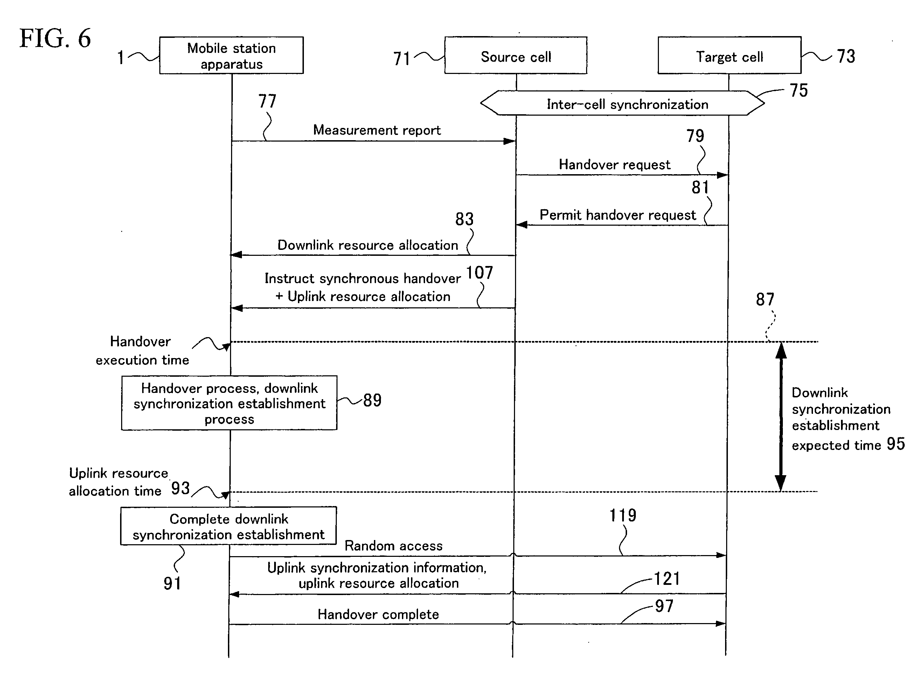

Figures 5 and 6 are sequence diagrams showing handover procedures in the communication apparatus according to Example 1, and the sequence diagrams show flows of processes when a synchronous handover is performed based on the elapsed time to the downlink synchronization establishment (Figure 5) and when a normal handover is performed (Figure 6). In both cases, the source cell and the target cell are in inter-cell synchronization. The diagrams show controls started from a state in which the mobile station apparatus communicates with the source cell, and a handover to the target cell is performed.

The synchronous handover process of Figure 5 will be described. The mobile station apparatus 1 notifies, to a source cell 71, at least a measurement result of the reception quality of the source cell 71 and a target cell 73 or a measurement report message 77 including a handover command request. The source cell 71 and the target cell 73 are in inter-cell synchronization 75.

When the source cell 71 determines that a handover to the target cell is necessary based on the content of the measurement report message 77, the source cell 71 notifies the necessity of handover of the mobile station apparatus 1 to the target cell 73 through a handover request message 79 to request for the preparation of handover. When the target cell 73 that has received the handover request message 79 determines that the handover can be executed, the target cell 73 notifies a handover request permission message 81 to the source cell 71. The source cell 71 that has received the handover request permission message 81 notifies a downlink resource allocation message 83 and a synchronous handover instruction message 85 to the mobile station apparatus 1. Either the source cell 71 or the target cell 73 may determine whether the handover is a synchronous handover. The synchronous handover instruction message 85 includes uplink resource allocation information for a handover complete message.

As the mobile station apparatus 1 receives the message, the synchronous handover process is carried out. If the synchronous handover instruction message 85 includes a handover execution time, the mobile station apparatus 1 performs the handover in the handover execution time 87. Immediate execution may be designated as the handover execution time 87.

The mobile station apparatus 1 switches control parameters of the radio frequency and the transmitting/receiving circuit in the handover execution time 87 and then executes a downlink synchronization establishment process to establish downlink wireless synchronization with the target cell (89). Parameters for the downlink synchronization establishment process are included in the synchronous handover instruction message 85 or reported or notified in advance by the source cell 71. The mobile station apparatus 1 completed with the downlink synchronization establishment compares the time that the downlink synchronization establishment is completed and the time after the downlink synchronization establishment expected time from the handover execution time (thus, uplink transmission time (93) after the handover designated by the uplink resource allocation information). If the downlink synchronization establishment is completed within the downlink synchronization establishment expected time (91), the mobile station apparatus 1 uses the uplink resource designated by the uplink resource allocation information included in the synchronous handover instruction message 85 to transmit a handover complete message 97 to the target cell, and the handover procedure is completed.

A synchronous handover process accompanied by a normal handover of Figure 6 will be described. The same reference numerals will be used for the same controls as in Figure 5. The process is the same as in Figure 5 up to the reception of the downlink resource allocation message 83. The mobile station apparatus 1 receives a synchronous handover instruction message 107 and starts a downlink synchronization establishment process for the target cell. The mobile station apparatus I completed with the downlink synchronization establishment compares the time of the completion of the downlink synchronization establishment (91) and the time after the downlink synchronization establishment expected time 97 from the handover execution time 87 (thus, uplink transmission time (93) after the handover designated by the uplink resource allocation information). If the downlink synchronization establishment is completed after the downlink synchronization establishment expected time 95 (91), the mobile station apparatus 1 cannot use the uplink resource allocation information included in the synchronous handover instruction message 107. Therefore, to transmit a handover complete message 93, the mobile station apparatus 1 needs to use a random access channel 119 to request the target cell 73 for the uplink synchronization information and the uplink resource allocation information. In this case, the signature used for the random access is selected at random. The target cell 73 that has received the random access channel 119 notifies uplink synchronization information for adjusting the uplink transmission timing of the mobile station apparatus 1 and uplink resource allocation information for transmitting a handover complete message (121). The mobile station apparatus 1 adjusts the uplink transmission timing based on the information and uses the designated uplink resource to transmit the handover complete message 97 to the target cell 73, and the handover procedure is completed.

Although Figures 5 and 6 are diagrams showing examples of sequence when the synchronous handover instruction message includes uplink resource allocation information for transmitting a handover complete message, Figures 5 and 6 can also be applied when uplink control signal resource allocation information for transmitting an uplink control signal is included. Figures 5 and 6 can also be applied when downlink control signal resource allocation information for transmitting a downlink control signal is included. Whether the uplink control signal resource allocation information is included or the downlink control signal resource allocation information is included, the main point that the time required to complete the downlink synchronization establishment and the downlink synchronization establishment expected time are compared to determine whether to perform synchronous handover is the same. The present invention can also be applied when the messages or the control signals are retransmitted.

The case that the uplink control signal resource allocation information for transmitting the uplink control signal is included will be described.

The mobile station apparatus 1 completed with the downlink synchronization establishment process compares the time that the downlink synchronization establishment is completed and the time after the downlink synchronization establishment expected time from the handover execution time (thus, resource allocation time of uplink control signal designated by the uplink control signal resource allocation information). If the downlink synchronization establishment is completed within the downlink synchronization establishment expected time, the mobile station apparatus 1 uses the uplink resource designated by the uplink control signal resource allocation information included in the synchronous handover instruction message to transmit an uplink control signal at the allocated time, and the target cell that has received the uplink control signal notifies uplink resource allocation information for a handover complete message. The mobile station apparatus 1 then uses the uplink resource designated by the uplink resource allocation information to transmit a handover complete message, and the synchronous handover is completed. On the other hand, if the downlink synchronization establishment is not completed within the Downlink synchronization establishment expected time, the mobile station apparatus 1 cannot use the uplink control signal resource allocation information included in the synchronous handover instruction message. Therefore, to transmit the handover complete message, the mobile station apparatus 1 needs to use the random access channel to request the target cell for the uplink synchronization information and the uplink resource allocation information. In this case, the signature used for the random access channel is selected at random, or if the signature is designated in advance, the designated signature is used. The target cell that has received the random access channel notifies uplink synchronization information for adjusting the uplink transmission timing of the mobile station apparatus 1 and uplink resource allocation information for transmitting the handover complete message. The mobile station apparatus 1 adjusts the uplink transmission timing based on the information and uses the designated uplink resource to transmit the handover complete message to the target cell, and the handover procedure is completed.

Next, the case that the downlink control signal resource allocation information for transmitting the downlink control signal is included will be shown.

The mobile station apparatus 1 completed with the downlink synchronization establishment process compares the time that the downlink synchronization establishment is completed and the time after the downlink synchronization establishment expected time from the handover execution time (thus, resource allocation time of the downlink control signa! designated by the downlink control signal resource allocation information). If the downlink synchronization establishment is completed within the downlink synchronization establishment expected time, the mobile station apparatus 1 receives a downlink control signal transmitted by the target cell at the designated Downlink control signal resource allocation time based on the downlink control signal resource allocation information included in the synchronous handover instruction message. The downlink control signal includes uplink resource allocation information for transmitting a handover complete message. The mobile station apparatus 1 then uses the uplink resource designated by the uplink resource allocation information to transmit a handover complete message, and the synchronous handover is completed. On the other hand, if the downlink synchronization establishment is not completed within the downlink synchronization establishment expected time, the mobile station apparatus 1 cannot use the downlink control signal resource allocation information included in the synchronous handover instruction message. Therefore, to transmit the handover complete message, the mobile station apparatus 1 needs to use the random access channel to request the target cell for the uplink synchronization information and the uplink resource allocation information. In this case, the signature used in the random access channel is selected at random, or the designated signature is used if the signature is designated in advance. The target cell that has received the random access channel notifies uplink synchronization information for adjusting the uplink transmission timing of the mobile station apparatus 1 and uplink resource allocation information for transmitting the handover complete message. The mobile station apparatus 1 adjusts the uplink transmission timing based on the information and uses the designated uplink resource to transmit the handover complete message to the target cell, and the handover procedure is completed.

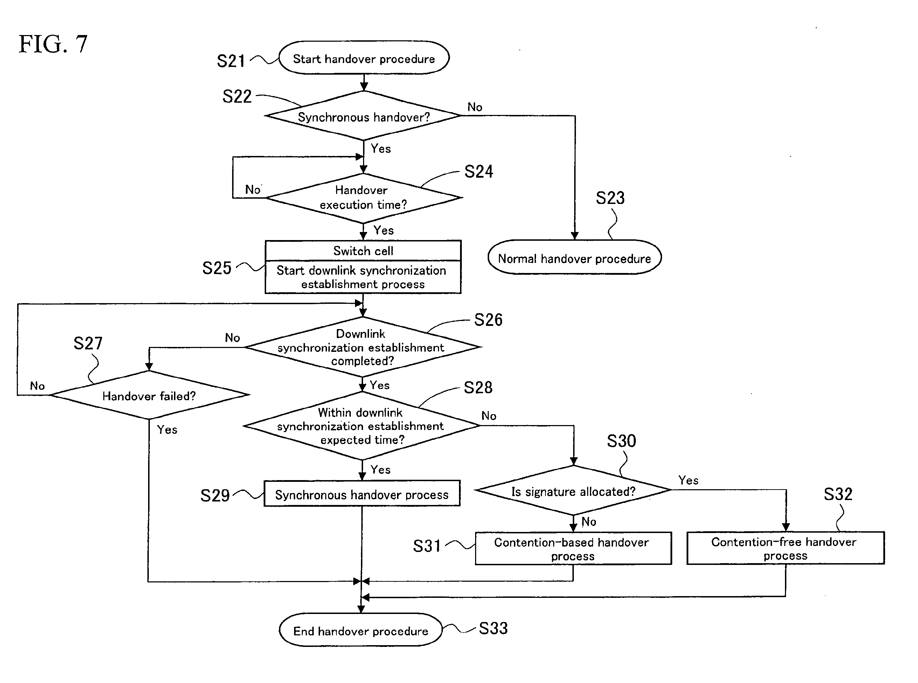

The base station apparatus of the source cell 71 can use the handover instruction message to allocate the signature to the mobile station apparatus I in advance to thereby designate the preamble transmitted by the mobile station apparatus 1. This can make the random access transmission after the completion of the downlink synchronization establishment contention-free. Figure 7 shows an example related to this.

In Figure 7, the process when the completion time of the downlink synchronization establishment to the target cell is not within the downlink synchronization establishment expected time is different from Figure 4. Therefore, the process (steps S21 to S29) until then will not be described, and the subsequent process will be described. The mobile station apparatus checks whether the signature used for random access transmission is allocated in advance (step S30). If the signature is allocated (Yes in step S30), the mobile station apparatus performs contention-free random access transmission using the allocated signature and requests the base station apparatus for uplink synchronization information and uplink resource allocation information for transmitting a handover complete message (step S32). On the other hand, if the signature is not allocated (No in step S30), the mobile station apparatus performs random access transmission using a signature selected at random and requests the base station apparatus for uplink synchronization information and uplink resource allocation information for transmitting a handover complete message (step S31). In either case, the subsequent process ends (step S33).

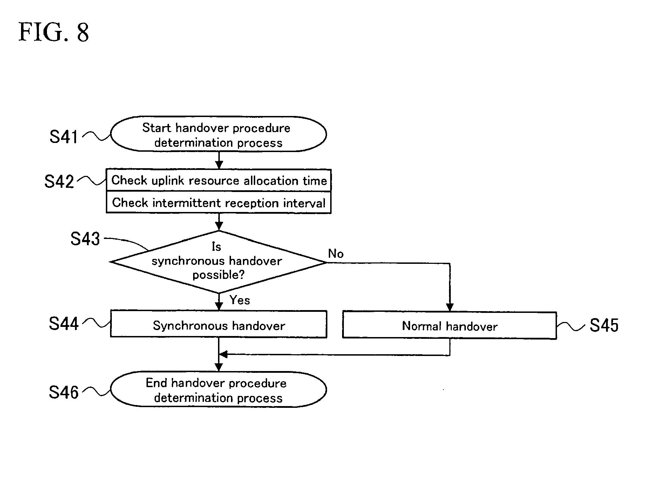

Figure 8 is a flow chart diagram showing a flow of a process for determining whether the base station apparatus is a synchronous handover according to the present Example. To carry out the synchronous handover, the base station apparatus takes the resource availability, communication quality, and downlink synchronization establishment expected time into consideration to determine the uplink resource allocation time for the mobile station apparatus to perform uplink transmission after the handover (step S41). When the mobile station apparatus performs intermittent reception, the timing that can receive the handover instruction message is limited. Therefore, the base station apparatus takes the intermittent reception interval into consideration at the same time to determine the uplink resource allocation time (step S42). The intermittent reception interval does not have to be considered when the mobile station apparatus does not perform the intermittent reception. If the uplink resource allocation time determined in step S42 is longer than the delay time allowed for the synchronous handover (No in step S43), not the synchronous handover, but a normal handover is instructed to the mobile station apparatus (step S45). On the other hand, if the uplink resource allocation time is shorter than the delay time allowed for the synchronous handover (Yes in step S43), the synchronous handover is instructed to the mobile station apparatus (step S44). In either case, the handover procedure determination process ends (step S46).

According to the present Example, the handover procedure can be performed after the downlink synchronization establishment expected time has passed, and a flexible handover procedure can be provided to the mobile station apparatus. The present Example is advantageous for the mobile station apparatus that the high-speed handover can be carried out by the synchronous handover procedure. The handover success rate can be improved by switching the handover procedure to continue the handover procedure even if the synchronous handover cannot be performed, and the use efficiency of resources improves. Furthermore, the degradation of speech quality due to a failure of handover can be prevented. The power consumption associated with the cell reselection procedure after the failure of the handover can also be reduced. The present Example is also advantageous for the base station apparatus that the time of uplink resource allocation can be set independent from the maximum allowable time for the downlink synchronization establishment of the mobile station apparatus, adaptive scheduling can be performed in accordance with the mobile station apparatus, and the use efficiency of resources improves.

### [Example 2]

Next, a communication technique according to Example 2 of the present invention will be described with reference to the drawings. The communication technique according to the present Example is **characterized in that** the effective time of uplink synchronization is taken into consideration in addition to the time to the downlink synchronization establishment.

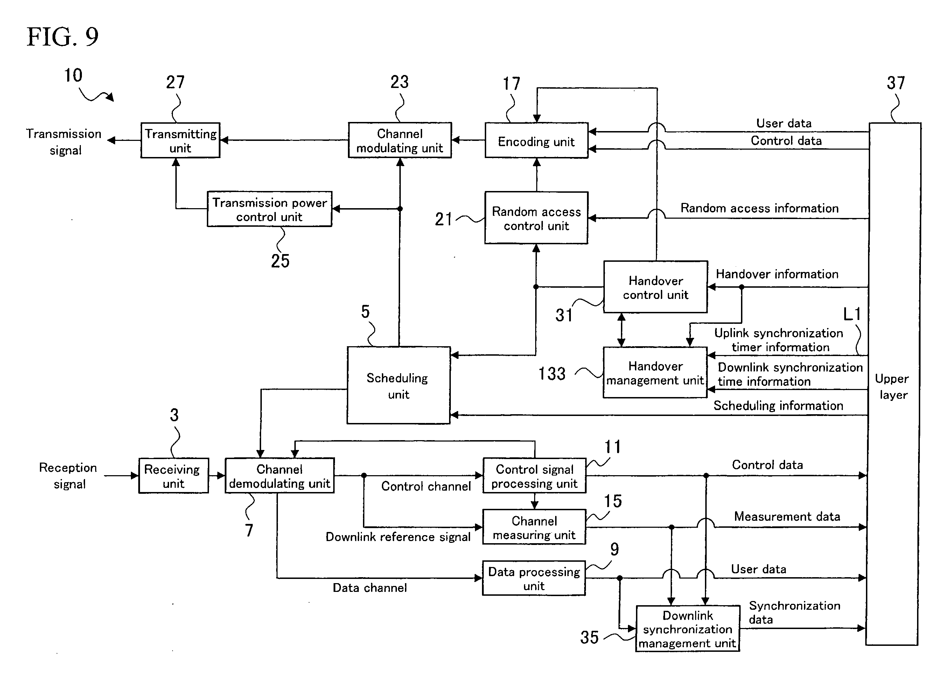

Figure 9 is a functional block diagram showing an example of configuration of a mobile station apparatus related to the communication technique according to Example 2 of the present invention. A mobile station apparatus 10 shown in Figure 9 has the same configuration as in Figure 2, and the only difference is that uplink synchronization timer information L1 is inputted to a handover management unit 133. The uplink synchronization timer information L1 is time information indicating the effective time that the uplink transmission timing of the mobile station apparatus is maintained (uplink synchronization maintenance time) based on the uplink synchronization information notified from the base station apparatus to adjust the gap in the uplink transmission timing of the mobile station apparatus. The uplink synchronization maintenance time is determined based on the uplink synchronization timer information, and the uplink synchronization is lost at the end of the uplink synchronization maintenance time. The handover management unit 133 manages inputted time information (handover execution time, maximum allowable time of handover, downlink synchronization time information, uplink resource allocation time, and uplink synchronization timer information) and controls the handover control unit 31 to perform an appropriate handover procedure described below in accordance with the correspondence relationship between the time information.

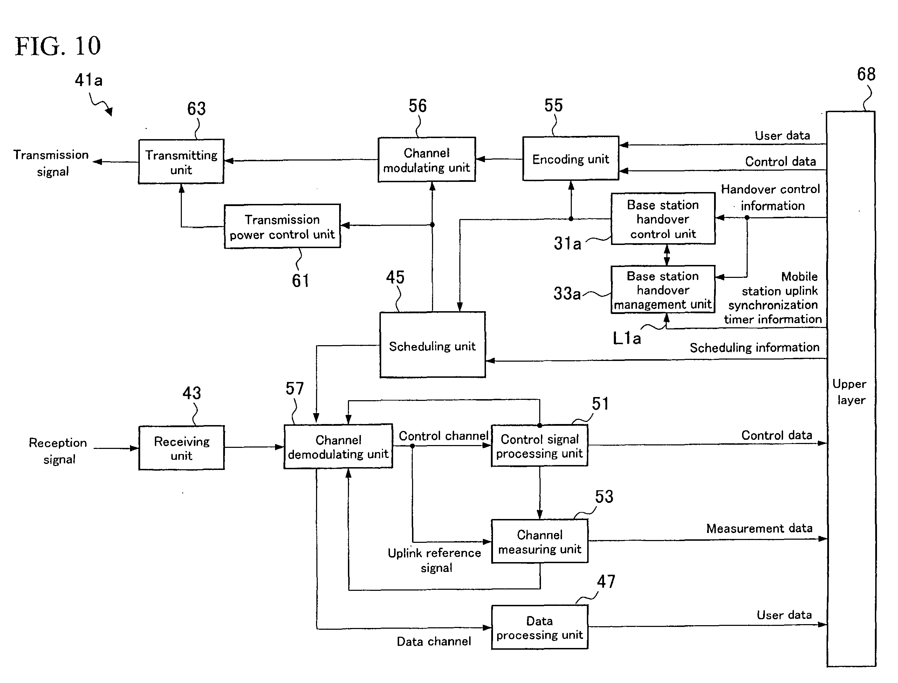

Figure 10 is a block diagram showing an example of configuration of a base station apparatus 41 a related to the communication technique according to Example 2 of the present invention. Figure 10 is the same as Figure 3 except that the upper layer 68 inputs mobile station uplink synchronization timer information L1a to a base station handover management unit 33a. The same reference numerals as in Figure 3 are used for other configuration blocks, and the description will not be repeated. The mobile station uplink synchronization timer information L1a is information of time that the uplink synchronization information is transmitted to the mobile station apparatus that performs a handover instruction or time information indicating the remaining time before the determination of the loss of uplink synchronization. The base station handover management unit 33a uses mobile station uplink synchronization timer information in addition to timing information, such as handover execution time and uplink resource time information, to determine whether the synchronous handover is possible. The base station handover management unit 33a also controls the base station handover control unit 31a in accordance with the handover procedure of the mobile station apparatus.

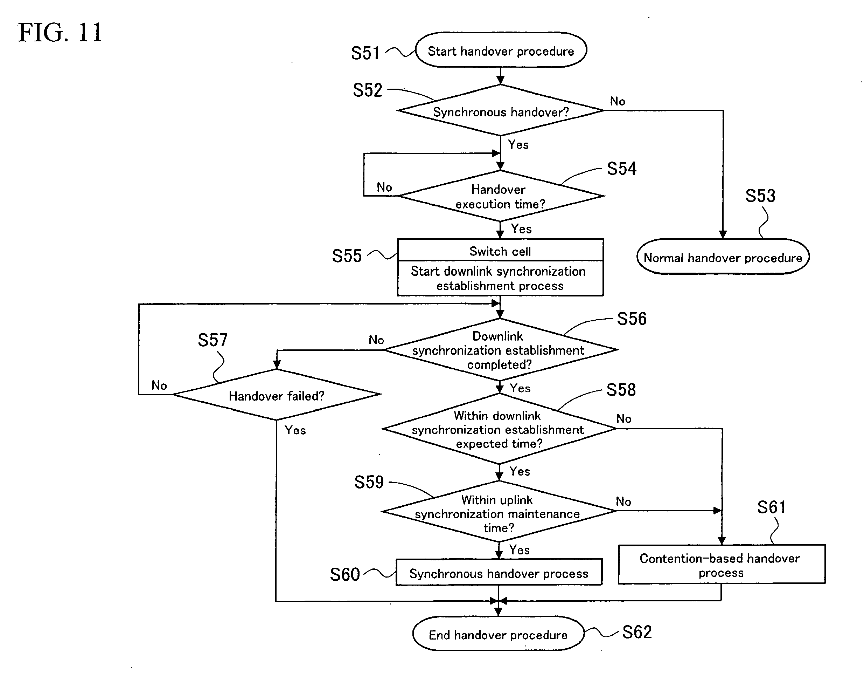

Figure 11 is a flow chart diagram showing a flow of a synchronous handover procedure of the mobile station apparatus according to Example 2 of the present invention. When a handover instruction message is received, the mobile station apparatus acquires handover information from the message. The content of the handover information is the same as the information described in Example 1. Returning to Figure 11, whether the handover is a synchronous handover is determined based on the handover information (step S52). If the handover is not a synchronous handover (No in step S52), the mobile station apparatus executes a normal handover process accompanied by random access after the completion of the handover (step S53). On the other hand, if the handover is a synchronous handover (Yes in step S52) and the handover execution time is designated, the reception process in the source cell is continued until the handover execution time (No in step S54). If the immediate execution is designated, the reception time of the handover instruction message is assumed to be the handover execution time. At the handover execution time (Yes in step S54), the mobile station apparatus follows the handover information to control the cell switch, terminate the transmission and reception to and from the source cell, and then starts a downlink synchronization establishment process for the target cell (step S55). In this case, the downlink synchronization establishment is checked at predetermined intervals (for example, every one subframe). If the downlink synchronization establishment is not established (No in step S56) and the predetermined handover protection time has expired, it is determined as a handover failure (Yes in step S57), and the handover process ends (step S62). If the handover protection time has not expired, the downlink synchronization establishment process continues (No in step S57). If the downlink synchronization establishment is successful (Yes in step S56), whether the downlink synchronization establishment has succeeded within the downlink synchronization establishment expected time is determined (step S58). If the downlink synchronization establishment has succeeded within the downlink synchronization establishment expected time (Yes in step S58), then whether the downlink synchronization establishment has succeeded within the uplink synchronization maintenance time is determined (step S59). If the establishment has succeeded within the uplink synchronization maintenance time (Yes in step S59), it is determines that the uplink synchronization establishment is not necessary for the target cell, and a synchronous handover process that does not require random access is executed (step S60).

On the other hand, if the downlink synchronization establishment is beyond the downlink synchronization establishment expected time or the uplink synchronization maintenance time (No in one of steps S58 and S59), it is determined that the uplink synchronization establishment is necessary for the target cell, and a contention-based handover process that requires the adjustment of the uplink transmission timing by random access transmission is executed (step S61).

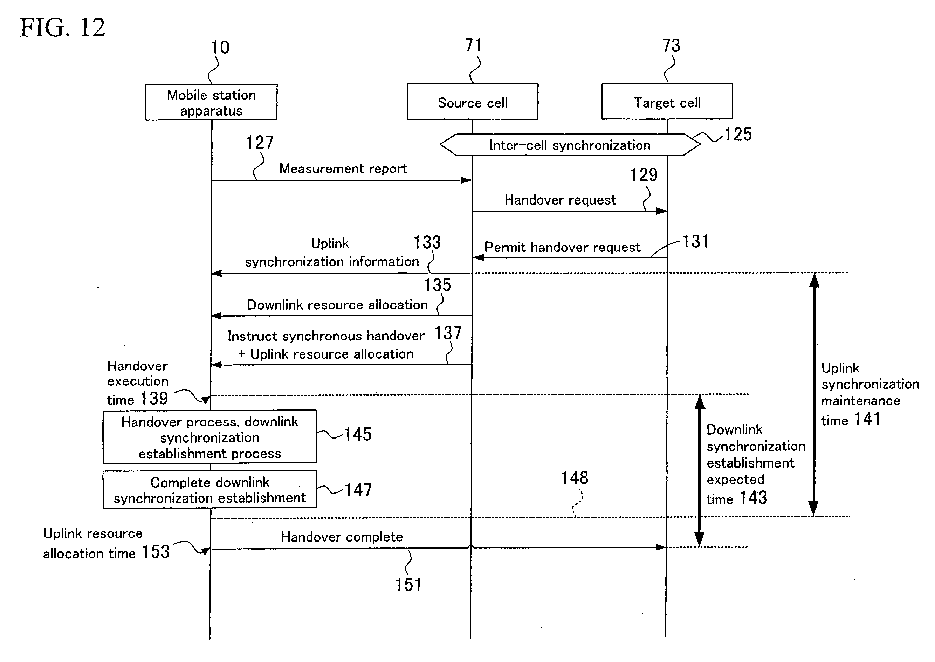

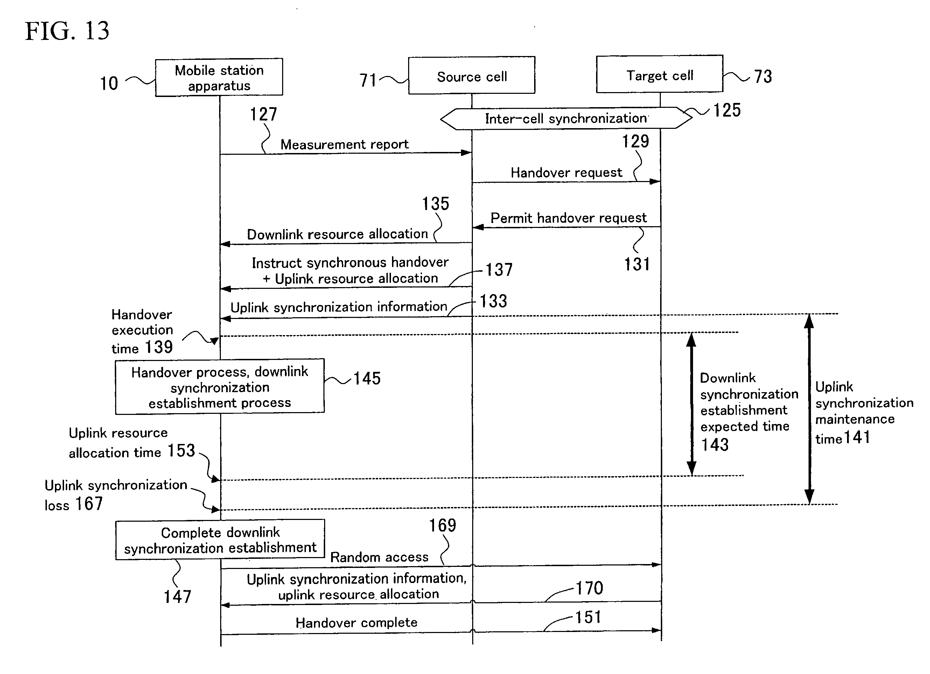

Figures 12 and 13 are sequence diagrams showing procedures of handover processes in the present Example, and the diagrams show a case that a synchronous handover is performed (Figure 12) and a case that a normal handover is performed (Figure 13) depending on the elapsed time to the downlink synchronization establishment. Both cases show controls in which the source cell and the target cell are in inter-cell synchronization and the process starts from a state that the mobile station apparatus communicates with the source cell and a handover to the target cell is performed.

This will be described with reference to Figure 12. The source cell 71 and the target cell 73 are in inter-cell synchronization 125. The mobile station apparatus 10 notifies, to the source cell 71, at least the measurement result of the reception quality between the source cell 71 and the target cell 73 or a measurement report message 127 including a handover command request. If the source cell 71 determines that the handover to the target cell 73 is necessary based on the content of the measurement report message 127, the source cell 71 notifies the target cell 73 of the necessity of the handover of the mobile station apparatus 10 through a handover request message 129 to request for the preparation of the handover. If the target cell 73 that has received the handover request message 129 determines that the handover can be performed, the target cell 73 notifies a handover request permission message 131 to the source cell 71. The source cell 71 that has received the handover request permission message 131 notifies a downlink resource allocation message 135 and a synchronous handover instruction message 1 37 to the mobile station apparatus 10. Either the source cell 71 or the target cell 73 may determine whether the handover is a synchronous handover. The synchronous handover instruction message 137 includes uplink resource allocation information for a handover complete message. As the mobile station apparatus 10 receives the message, the synchronous handover process is carried out. If the synchronous handover instruction message 137 includes a handover execution time, the mobile station apparatus 10 performs the handover in a handover execution time 139. Immediate execution may be designated as the handover execution time. The mobile station apparatus 10 switches the control parameters of the radio frequency and the transmitting/receiving circuit in the handover execution time and then executes a downlink synchronization establishment process for establishing the downlink wireless synchronization with the target cell 73 (145). The parameters for the downlink synchronization establishment process are included in the synchronous handover instruction message 137 or reported or notified in advance by the source cell 71. If uplink synchronization information 133 for adjusting the gap in the uplink transmission timing of the mobile station apparatus is further notified by the source cell 71 in parallel with the handover procedure, the mobile station apparatus 10 calculates an uplink synchronization maintenance time 141, which is an interval in which the uplink synchronization establishment is secured, and performs time keeping.

The mobile station apparatus completed with the downlink synchronization establishment (147) compares the time that the downlink synchronization establishment is completed, the time after the downlink synchronization establishment expected time 143 from the handover execution time (thus, uplink transmission time after the handover designated in the uplink resource allocation information), and the time after the uplink synchronization maintenance time 141 from the reception of the uplink synchronization information for the last time (thus, the time that the uplink synchronization is assumed to be lost). If the downlink synchronization establishment is completed within the downlink synchronization establishment expected time and within the uplink synchronization maintenance time, the mobile station apparatus uses the uplink resource designated by the uplink resource allocation information included in the synchronous handover instruction message to transmit a handover complete message 151 to the target cell 73, and the handover procedure is completed. The uplink synchronization maintenance time 141 is from the transmission timing of the uplink synchronization information 133 to timing 148 that the uplink synchronization maintenance time 141 expires. The downlink synchronization establishment expected time 143 is time from the handover execution time 139 to an uplink resource allocation time 153.

Figure 13 will be described. The same reference numerals are used for the same controls as in Figure 12. Figure 13 is the same as Figure 12 from the reception of the synchronous handover instruction message 137 to the start of the downlink synchronization establishment process 145 for the target cell 73. The mobile station apparatus 10 completed with the downlink synchronization establishment compares the time that the downlink synchronization establishment is completed 147, the time after the downlink synchronization establishment expected time 143 from the handover execution time 139 (thus, uplink transmission time after the handover designated in the uplink resource allocation information), and the time after the uplink synchronization maintenance time 141 from the reception of the uplink synchronization information 133 for the last time (thus, time that the uplink synchronization is assumed to be lost).

If the downlink synchronization establishment is completed (147) after the downlink synchronization establishment expected time 143, the uplink resource allocation information included in the synchronous handover instruction message 137 cannot be used.

Similarly, if the downlink synchronization establishment is completed (147) after the uplink synchronization maintenance time 141, the uplink synchronization is lost, and the mobile station apparatus 10 cannot use the uplink resource allocation information. Therefore, as shown in Figure 13, if the downlink synchronization establishment is completed (147) after at least one of the downlink synchronization establishment expected time 143 and the uplink synchronization maintenance time 141, the mobile station apparatus 10 needs to use a random access channel 169 to request the target cell for uplink synchronization information and uplink resource allocation information.

In this case, the signature used for random access is selected at random. The base station apparatus of the target cell 73 that has received the random access channel inputs uplink synchronization information for adjusting the uplink transmission timing of the mobile station apparatus 10 and uplink resource allocation information for transmitting a handover complete message into a downlink control channel 170 to notify the information to the mobile station apparatus 10. The mobile station apparatus 10 adjusts the uplink transmission timing based on the information and uses the designated uplink resource to transmit a handover complete message 151 to the target cell 73, and the handover procedure is completed.

Although Figures 12 and 13 show examples when the synchronous handover instruction message includes uplink resource allocation information for transmitting a handover complete message, Figures 12 and 13 may also be applied when uplink control signal resource allocation information for transmitting an uplink control signal is included. Figures 12 and 13 can also be applied when downlink control signal resource allocation information for transmitting a Downlink control signal is included. Whether the uplink control signal resource allocation information is included or the downlink control signal resource allocation information is included, the main point that the time required to complete the downlink synchronization establishment is compared with the uplink synchronization maintenance time and the downlink synchronization establishment expected time to determine whether to perform synchronous handover is the same. The present invention can also be applied when the messages or the control signals are retransmitted. The timing that the uplink synchronization information is notified may be any timing before the handover execution time. The expiration time of the uplink synchronization maintenance time (time that the uplink synchronization is lost) may be the time after a predetermined time (for example, 500ms) after the reception of the uplink synchronization information for the last time and may be different from Figures 12 and 13. The case that the uplink control signal resource allocation information for transmitting the uplink control signal is included will be described below.

The mobile station apparatus 10 completed with the downlink synchronization establishment process compares the time that the downlink synchronization establishment is completed, the time after the downlink synchronization establishment expected time from the handover execution time (thus, resource allocation time of uplink control signal designated in the uplink control signal resource allocation information), and the time after the uplink synchronization maintenance time from the reception of the uplink synchronization information for the last time (thus, time that the uplink synchronization is assumed to be lost). If the downlink synchronization establishment is completed within the downlink synchronization establishment expected time and within the uplink synchronization maintenance time, the mobile station apparatus 10 uses the uplink resource designated by the uplink control signal resource allocation information included in the synchronous handover instruction message to transmit the uplink control signal at the allocated time. The target cell that has received the uplink control signal notifies uplink resource allocation information for a handover complete message. The mobile station apparatus 10 then uses the uplink resource designated by the uplink resource allocation information to transmit the handover complete message, and the synchronous handover is completed. On the other hand, if the downlink synchronization establishment is not completed within the downlink synchronization establishment expected time or the uplink synchronization maintenance time, the mobile station apparatus 10 cannot use the uplink control signal resource allocation information included in the synchronous handover instruction message. Therefore, to transmit a handover complete message, the mobile station apparatus 10 needs to use the random access channel to request the target cell for the uplink synchronization information and the uplink resource allocation information. In this case, the signature used for the random access channel is selected at random, or if the signature is designated in advance, the designated signature is used. The target cell that has received the random access channel notifies the uplink synchronization information for adjusting the uplink transmission timing of the mobile station apparatus 10 and the uplink resource allocation information for transmitting the handover complete message. The mobile station apparatus 10 adjusts the uplink transmission timing based on the information and uses the designated uplink resource to transmit the handover complete message to the target cell, and the handover procedure is completed.

Next, the case that the downlink control signal resource allocation information for transmitting the downlink control signal is included will be shown below.

The mobile station apparatus 10 completed with the downlink synchronization establishment process compares the time that the Downlink synchronization establishment is completed, the time after the downlink synchronization establishment expected time from the handover execution time (thus, resource allocation time of downlink control signal designated in the Downlink control signal resource allocation information), and the time after the uplink synchronization maintenance time from the reception of the uplink synchronization information for the last time (thus, the time that the uplink synchronization is assumed to be lost). If the downlink synchronization establishment is completed within the downlink synchronization establishment expected time and within the uplink synchronization maintenance time, the mobile station apparatus 10 receives a downlink control signal transmitted by the target cell at the designated downlink control signal resource allocation time based on the downlink control signal resource allocation information included in the synchronous handover instruction message. The downlink control signal includes uplink resource allocation information for transmitting a handover complete message. The mobile station apparatus 10 then uses the uplink resource designated by the uplink resource allocation information to transmit the handover complete message, and the synchronous handover is completed. On the other hand, if the downlink synchronization establishment is not completed within the downlink synchronization establishment expected time or the uplink synchronization maintenance time, the mobile station apparatus 10 cannot use the downlink control signal resource allocation information included in the synchronous handover instruction message. Therefore, to transmit the handover complete message, the mobile station apparatus 10 needs to use the random access channel to request the target cell for the uplink synchronization information and the uplink resource allocation information. In this case, the signature used for the random access channel is selected at random, or if the signature is designated in advance, the designated signature is used. The target cell that has received the random access channel notifies uplink synchronization information for adjusting the uplink transmission timing of the mobile station apparatus 10 and uplink resource allocation information for transmitting a handover complete message. The mobile station apparatus 10 adjusts the uplink transmission timing based on the information and uses the designated uplink resource to transmit the handover complete message to the target cell, and the handover procedure is completed.

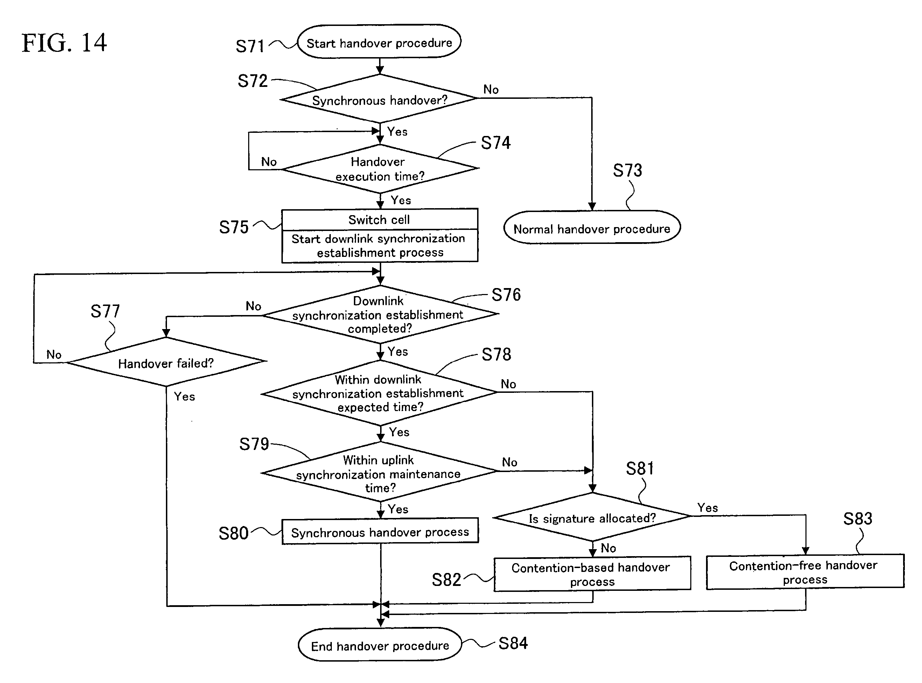

The base station apparatus of the source cell 71 can use the handover instruction message to allocate the signature to the mobile station apparatus 10 in advance to allow the mobile station apparatus 10 to make the random access transmission after the completion of the downlink synchronization establishment contention-free. The process will be described with reference to Figure 14. In Figure 14, the process when the completion time of the downlink synchronization establishment to the target cell is not within the downlink synchronization establishment time and not within the uplink synchronization maintenance time is different from the process shown in Figure 11. Thus, the process up to step S77 is the same as the process up to step S57 of Figure 11. If the downlink synchronization establishment is successful (Yes in step S76), the mobile station apparatus determines whether the downlink synchronization establishment has succeeded within the downlink synchronization establishment expected time (step S78). If the downlink synchronization establishment has succeeded within the downlink synchronization establishment expected time (Yes in step S78), then the mobile station apparatus determines whether the downlink synchronization establishment has succeeded within the uplink synchronization maintenance time (step S79). If the downlink synchronization establishment has succeeded within the uplink synchronization maintenance time (Yes in step S79), the mobile station apparatus determines that the uplink synchronization establishment is not necessary for the target cell and executes a synchronous handover process that does not require random access (step S80). If one of steps S78 and S79 is No, the mobile station apparatus checks in step S81 whether a signature used for random access transmission is allocated in advance. If the signature is allocated (Yes in step S81), the mobile station apparatus performs contention-free random access transmission using a signature allocated in step S83 and requests the base station apparatus for uplink synchronization information and uplink resource allocation information for transmitting a handover complete message. On the other hand, if the signature is not allocated (No in step S81), the mobile station apparatus performs contention-based random access transmission using a signature selected at random and requests the base station apparatus for uplink synchronization information and uplink resource allocation information for transmitting a handover complete message.

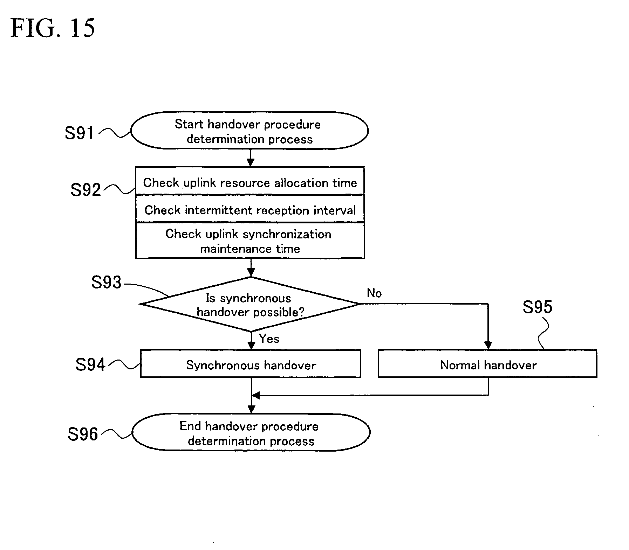

Figure 15 is a flow chart diagram showing a flow of a process for determining whether the base station apparatus performs a synchronous handover according to the present Example. First, in step S91, a determination process of handover procedure starts. In step S92, the uplink resource allocation time is checked, the intermittent reception interval is checked, and the uplink synchronization maintenance time is checked. More specifically, when carrying out a synchronous handover, the base station apparatus takes the resource availability, the communication quality, and the downlink synchronization establishment expected time into consideration to determine the uplink resource allocation time for the mobile station apparatus to perform uplink transmission after the handover. When the mobile station apparatus performs intermittent reception, the timing that the handover instruction message can be received is limited. Therefore, at the same time, the base station apparatus also takes the intermittent reception interval into consideration to determine the uplink resource allocation time. When the mobile station apparatus does not perform intermittent reception, the base station apparatus does not have to particularly take the intermittent reception interval into consideration. Furthermore, the base station apparatus considers whether the uplink resource allocation time is within the uplink synchronization maintenance time. The base station apparatus determines whether the uplink resource allocation time determined in step S92 is longer than the delay time allowed for synchronous handover (step S93). If the uplink resource allocation time is longer than the delay time, the synchronous handover is not possible (No in step S93). The base station apparatus instructs the mobile station apparatus to perform not a synchronous handover, but a normal handover (step S95).

On the other hand, if uplink resource allocation time is shorter than the delay time allowed for the synchronous handover (Yes in step S93), the base station apparatus instructs the mobile station apparatus to perform synchronous handover (step S94). Next, in step S96, the handover procedure determination process ends in either case.

When the uplink synchronization of the mobile station apparatus is predicted to be lost before the uplink resource allocation time after the completion of the handover, such as when the synchronous handover is performed during intermittent reception, the source cell can carry out an uplink resynchronization request process for the mobile station apparatus and generate uplink synchronization information for uplink resynchronization for the mobile station apparatus. The uplink channel measured by the base station apparatus for the uplink resynchronization request process may be an arbitrary uplink channel. The uplink synchronization information may be included in a downlink resource allocation message or a synchronous handover instruction message before transmission.

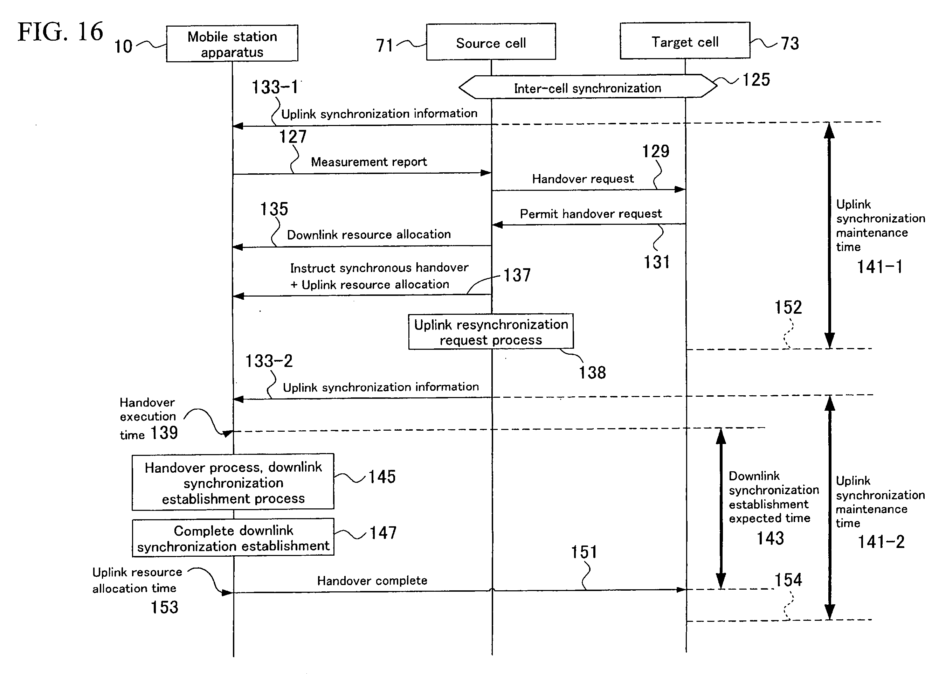

Figure 16 shows the sequence. The same reference numerals are used for the same controls as in Figure 12, and the description will not be repeated. The target cell that has received the handover request permission message 131 determines for the mobile station apparatus 10 whether the uplink synchronization at the uplink resource allocation time is maintained. If the uplink resynchronization is necessary, the target cell carries out an uplink resynchronization request process 138. If the uplink resynchronization is not necessary, nothing is particularly performed. Although Figure 16 illustrates an example that the uplink resynchronization request process 138 is carried out after the notification of the synchronous handover instruction message 137, the source cell 71 may execute the uplink resynchronization request process 138 at any timing from the reception of the handover request permission message 131 from the target cell 73 to the handover execution time. Uplink synchronization information 133-2 of the mobile station apparatus 10 generated by the uplink resynchronization request process 138 can be notified with the downlink resource allocation message 135 and the synchronous handover instruction message 137.

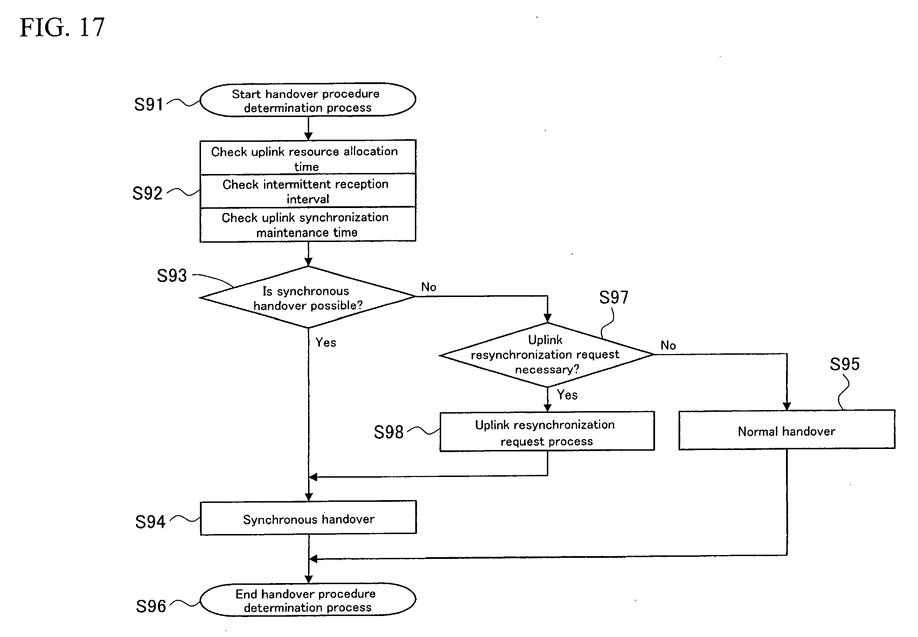

Figure 17 is a diagram showing a processing flow for determining whether the base station apparatus performs a synchronous handover and further determining whether an uplink resynchronization request is necessary according to the present Example. When the process starts (step S91), in step S92, the base station apparatus considers the resource availability, the communication quality, and the downlink synchronization establishment expected time necessary to carry out the synchronous handover to determine the uplink resource allocation time for the mobile station apparatus to perform the uplink transmission after the handover. When the mobile station apparatus performs intermittent reception, the timing that the handover instruction message can be received is limited. Therefore, at the same time, the base station apparatus also takes the intermittent reception interval into consideration to determine the uplink resource allocation time. When the mobile station apparatus does not perform the intermittent reception, the base station apparatus does not have to take the intermittent reception interval into consideration. Furthermore, the base station apparatus considers whether the uplink resource allocation time is within the uplink synchronization maintenance time. If the uplink resource allocation time determined in step S92 is longer than the delay time allowed for the synchronous handover and the synchronous handover is possible by requesting the uplink resynchronization, the base station apparatus carries out an uplink resynchronization request process and instructs the synchronous handover (steps S97, S98, and S94). If the synchronous handover cannot be carried out after the uplink resynchronization, the base station apparatus instructs the mobile station apparatus for a normal handover (step S95). On the other hand, if the uplink resource allocation time is shorter than the delay time allowed for the synchronous handover, the base station apparatus instructs the mobile station apparatus for the synchronous handover (step S94). According to the present Example, the handover procedure can be executed considering the downlink synchronization establishment expected time and the uplink synchronization maintenance time, and a flexible handover procedure can be provided to the mobile station apparatus. It is advantageous for the mobile station apparatus that a high-speed handover can be carried out based on the synchronous handover procedure and that the handover procedure can be continued even if the synchronous handover cannot be performed by switching the handover procedure. Therefore, the handover success rate can be improved, and the use efficiency of resources improves. Furthermore, the degradation of the speech quality due to a handover failure can be prevented, and the power consumption associated with the cell reselection procedure after the handover failure can be reduced. In addition, the base station apparatus can set the time of uplink resource allocation independent from the maximum allowable time for the downlink synchronization establishment of the mobile station apparatus within the uplink synchronization maintenance time. Therefore, adaptive scheduling can be performed in accordance with the mobile station apparatus, and the use efficiency of resources improves.

### [Example 3]

Next, a communication apparatus according to Example 3 of the present invention will be described with reference to the drawings. A communication technique according to the present Example shows an example that a handover instruction message is received later than the handover execution time.

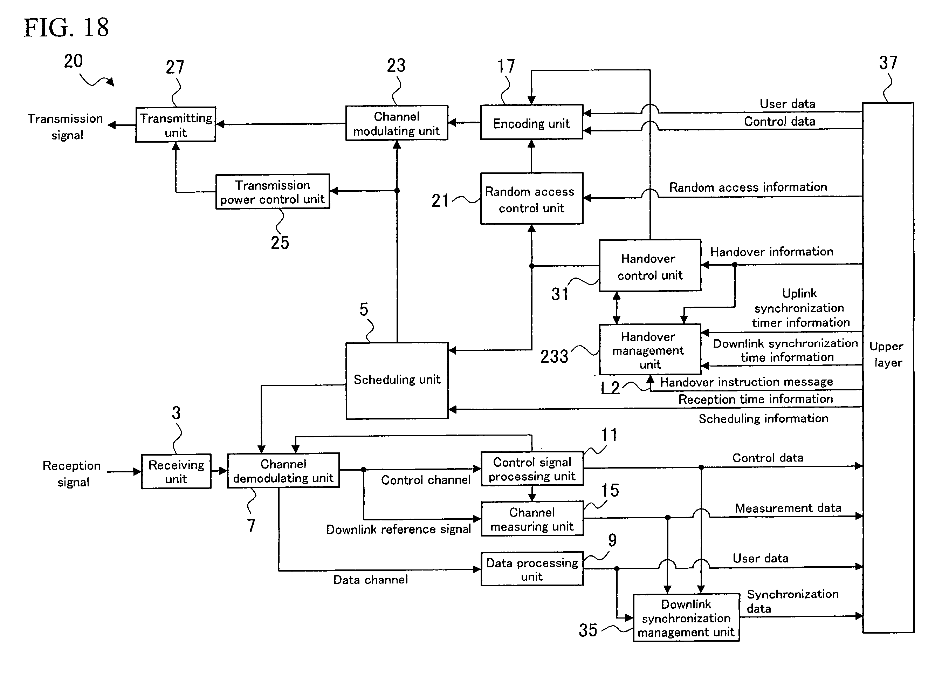

Figure 18 is a functional block diagram showing an example of configuration of a mobile station apparatus related to a communication technique according to Example 3 of the present invention. A mobile station apparatus 20 shown in Figure 18 has the same configuration as in Figure 9, and the only difference is that the upper layer 37 inputs handover instruction message reception time information L2 to a handover management unit 233. The same reference numerals as Figure 9 are used for other configuration blocks, and the description will not be repeated. The handover instruction message reception time information L2 is time information indicating a frame or subframe number when the mobile station apparatus actually receives a handover instruction message notified from the base station apparatus of the source cell to the mobile station apparatus. The handover management unit 233 manages inputted time information (handover execution time, maximum allowable time of handover, downlink synchronization time information, uplink resource allocation time, uplink synchronization timer information, and handover instruction message reception time information) and controls the handover control unit 31 to performs an appropriate handover procedure described later in accordance with the correspondence relationship between the time information. An example of configuration of the base station apparatus may be the same as in Figure 3 or Figure 10.

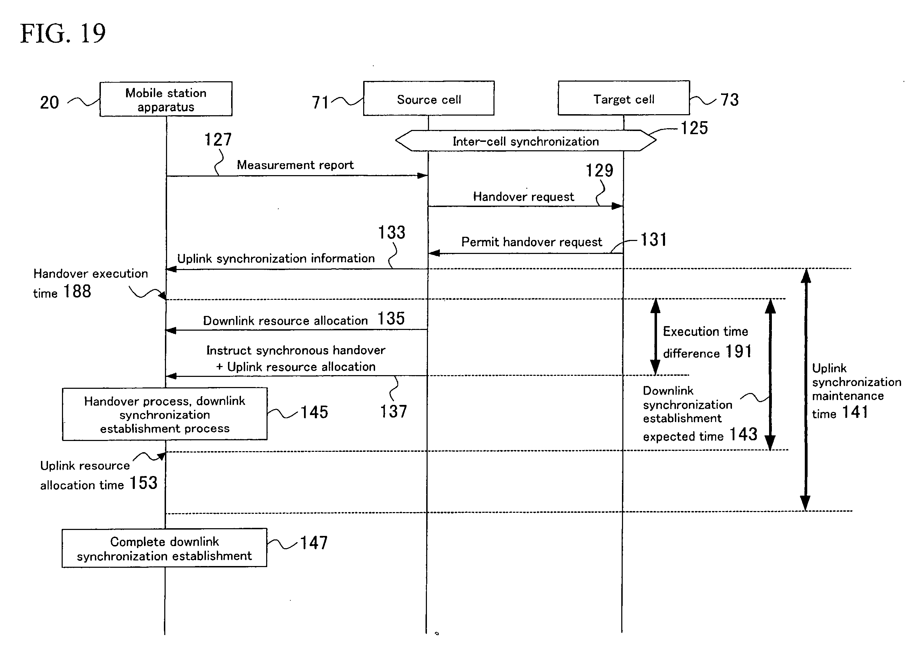

Figure 19 is a sequence diagram showing a handover procedure in the communication technique according to the present Example. Figure 19 shows an example of control started from a state that the source cell 71 and the target cell 73 are in inter-cell synchronization and the mobile station apparatus 20 communicates with the source cell 71, and a handover to the target cell 73 is performed. Since up to the reception of the handover request permission message 131 by the source cell 71 is the same as in Figure 13, the same reference numerals are used for the same controls in Figure 13, and the description will not be repeated. The source cell 71 that has received the handover request permission message 131 notifies the downlink resource allocation message 135 and the synchronous handover instruction message 137 to the mobile station apparatus 20. Either the source cell 71 or the target cell 73 can determines whether the handover is a synchronous handover. The synchronous handover instruction message 137 includes uplink resource allocation information for a handover complete message.

Here, a case that the synchronous handover instruction message 137 includes a handover execution time other than immediate execution and that a handover execution time 188 indicated a time in the past will be described. In this case, the mobile station apparatus 20 cannot determine whether the message is received after the originally designated handover execution time 188 as the synchronous handover instruction message 137 is repeatedly retransmitted or the handover execution time 188 of the next period is designated from the beginning. Therefore, the mobile station apparatus 20 calculates, in frames or subframes, a time difference (execution time difference) 191 between the handover execution time 188 and the time that the synchronous handover instruction message 137 is actually received. The handover management unit 233 calculates the execution time difference 191. In this case, if the execution time difference 191 is smaller than a threshold, it is determined that the message is received after the originally designated time, and the handover process 145 immediately starts without waiting for the next period. The threshold is notified by one of the handover instruction message 137, control information related to measurement, or broadcast, or set by the mobile station apparatus 20. To immediately start the handover process, the mobile station apparatus 20 switches the control parameters of the radio frequency or the transmitting/receiving circuit and executes the downlink synchronization establishment process 145 for establishing downlink wireless synchronization with the target cell 73 later. The parameters for the downlink synchronization establishment process 145 are included in the synchronous handover instruction message 137 or reported or notified by the source cell 73 in advance. Furthermore, in parallel with the handover procedure, when the uplink synchronization information 133 for adjusting the gap in the uplink transmission timing of the mobile station apparatus 20 is notified by the source cell 71, the mobile station apparatus 20 calculates the uplink synchronization maintenance time 141, which is an interval that the uplink synchronization establishment is secured, and performs timekeeping. The following detailed operations are the same as in Example 2 of the present invention, and the description will not be repeated (153, 147).

The base station apparatus of the source cell 73 can use the handover instruction message 137 and allocate a signature to the mobile station apparatus 20 in advance to allow the mobile station apparatus 20 to make the random access transmission after the completion of the downlink synchronization establishment contention-free. However, the detailed operations are the same as in Example 2, and the description will not be repeated.

Although Figure 19 is an example in which the synchronous handover instruction message 137 includes uplink resource allocation information for transmitting a handover complete message, Figure 19 can also be applied when uplink control signal resource allocation information for transmitting an uplink control signal is included. Figure 19 can also be applied when downlink control signal resource allocation information for transmitting a downlink control signal is included. Whether the uplink signal resource allocation information is included or the downlink control signal resource allocation information is included, the main point that whether to perform a synchronous handover is determined based on the relationship between the reception time of the synchronous handover instruction message, the handover execution time, the downlink synchronization establishment expected time, and the uplink synchronization maintenance time is the same (see Example 2 for an example of application).

The timing of the notification of the uplink synchronization information may be any timing before the handover execution time. The expiration time of the uplink synchronization maintenance time (time that the uplink synchronization is lost) can be set to the point after a predetermined time (for example, 500ms) from the reception of the uplink synchronization information for the last time, and the expiration time may be different from Figure 19.

When the uplink synchronization of the mobile station apparatus is predicted to be lost before the uplink resource allocation time after the completion of the handover, such as when the synchronous handover is performed during the intermittent reception, the source cell can apply an uplink resynchronization request process to the mobile station apparatus to generate uplink synchronization information for uplink resynchronization for the mobile station apparatus. The uplink channel measured by the base station apparatus for the uplink resynchronization request process may be an arbitrary uplink channel. The uplink synchronization information may be included in a downlink resource allocation message or a synchronous handover instruction message before transmission.

According to the present Example, the handover procedure can be executed considering the downlink synchronization establishment expected time and the uplink synchronization maintenance time, and a flexible handover procedure can be provided to the mobile station apparatus. Since the mobile station apparatus can immediately execute the handover instruction message received beyond the handover execution time, the success rate of handover improves. In addition, it is advantageous that a high-speed handover can be carried out based on the synchronous handover procedure and that the handover procedure can be continued even if the synchronous handover cannot be performed by switching the handover procedure. Therefore, the handover success rate can be improved, and the use efficiency of resources improves.

Furthermore, the degradation of the speech quality due to a handover failure can be prevented, and the power consumption associated with the cell reselection procedure after the handover failure can be reduced. In addition, the base station apparatus can set the time of uplink resource allocation independent from the maximum allowable time for the downlink synchronization establishment of the mobile station apparatus within the uplink synchronization maintenance time. Therefore, adaptive scheduling can be performed in accordance with the mobile station apparatus, and the use efficiency of resources improves.

### [Example 4]

Example 4 of the present invention will be described. The present Example illustrates a method when two pieces of resource allocation information related to the downlink control signal resource allocation time and the downlink synchronization establishment expected time are notified by a synchronous handover message. The configuration of the mobile station apparatus of the present Example may be the same as in Figure 9. The configuration of the base station apparatus may be the same as in Figure 3 or Figure 10.

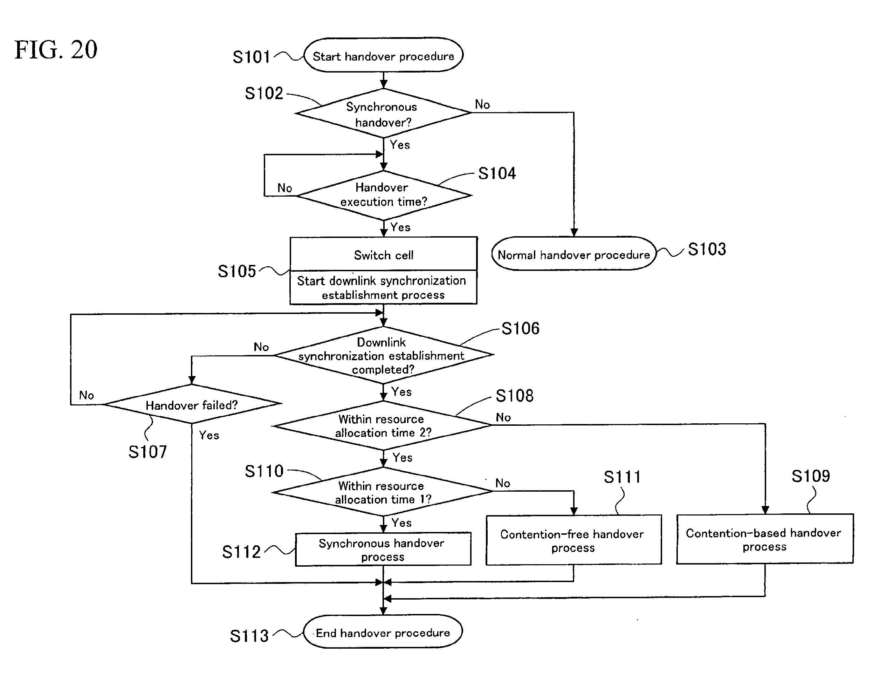

Figure 20 is a flow chart diagram of a handover procedure in a communication technique according to the present Example. The mobile station apparatus starts the process from step S101, and when a handover instruction message is received, acquires the handover information from the message. In addition to Example 1, the content of the handover information includes a resource allocation time 1 related to the downlink synchronization establishment expected time (transmission time of the handover complete message designated in the uplink resource allocation information) and a resource allocation time 2 related to the downlink control signal (reception time of the downlink control signal designated in the downlink control signal resource information). Here, the resource allocation time 1 is equal to or smaller than the resource allocation time 2, and the time from the handover execution time to the downlink synchronization establishment expected time must be set before the uplink synchronization maintenance time expires. More specifically, the time from the handover execution time to the downlink synchronization establishment expected time must be set before the uplink synchronization maintenance time expires. The resource allocation time 1 and the resource allocation time 2 are adaptively determined by considering the mobile station performance of the mobile station apparatus, the downlink reception quality during handover, the movement speed, and the like, or defined in advance.

Returning to Figure 20, whether the handover is a synchronous handover is determined from the handover information (step S102). If the handover is not a synchronous handover (No in step S102), the mobile station apparatus executes a normal handover process accompanied by random access after the completion of handover, but the details will not be described (step S103).

If the handover is a synchronous handover (Yes in step S102) and the handover execution time is designated, the reception process in the source cell continues until the handover execution time (No in step S104). If immediate execution is designated, the reception time of the handover instruction message is assumed to be the handover execution time. When it is handover execution time (Yes in step S104), the mobile station apparatus follows the handover information to perform cell switch control to terminate transmission and reception to and from the source cell and then starts a downlink synchronization establishment process for the target cell (step S105). At this point, the mobile station apparatus checks the downlink synchronization establishment at predetermined intervals (for example, every one subframe, step S106). If the downlink synchronization establishment is not established (No in step S106) and the predetermined handover protection time has expired, the mobile station apparatus determines that the handover has failed (Yes in step S107), and the handover process ends (step S113).

If the handover protection time has not expired (Yes in step S106); the downlink synchronization establishment process continues. If the downlink synchronization establishment is successful (Yes in step S106), the mobile station apparatus determines whether the downlink synchronization establishment has succeeded within the resource allocation time 2 (step S108). If the downlink synchronization establishment has succeeded within the resource allocation time 2 (Yes in step S 108), then the mobile station apparatus determines whether the downlink synchronization establishment has succeeded within the resource allocation time 1 (step S110). If the downlink synchronization establishment has succeeded within the resource allocation time 1 (Yes in step S110), the mobile station apparatus determiners that the uplink synchronization establishment is not necessary for the target cell and executes a synchronous handover process that does not require random access (step S112).

If the downlink synchronization establishment is completed after the resource allocation time 2 (No in step S108), the mobile station apparatus cannot use the uplink resource allocation information at the resource allocation time 1 included in the synchronous handover instruction message and the downlink control signal resource allocation information at the resource allocation time 2. Therefore, to transmit a handover complete message, the mobile station apparatus needs to use the random access channel to request the target cell for the uplink synchronization information and the uplink resource allocation information. The mobile station apparatus performs random access transmission using a signature selected at random to request the base station apparatus for the uplink synchronization information and the uplink resource allocation information for transmitting the handover complete message (step S109).

On the other hand, if the downlink synchronization establishment is completed within the resource allocation time 2 but after the resource allocation time 1, the uplink synchronization is also lost. Therefore, the mobile station apparatus needs to use the random access channel to request the target cell for the uplink synchronization information (step S111). In this case, the mobile station apparatus receives a downlink control signal based on the downlink control signal resource allocation information at the resource allocation time 2. The mobile station apparatus performs a contention-free random access transmission using a signature designated by the downlink control signal and requests the base station apparatus for uplink synchronization information and uplink resource allocation information for transmitting a handover complete message.

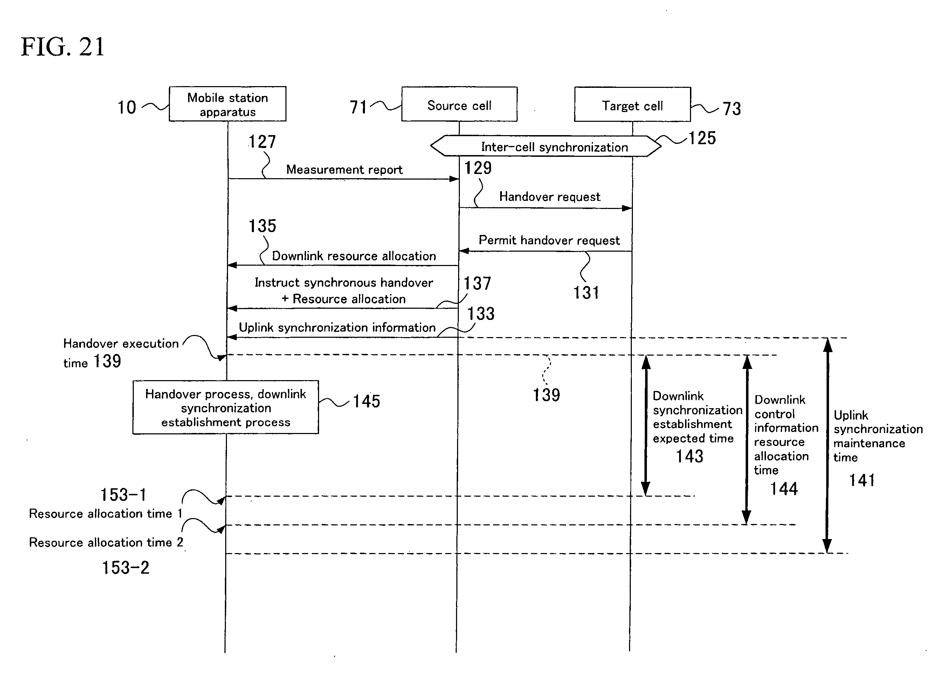

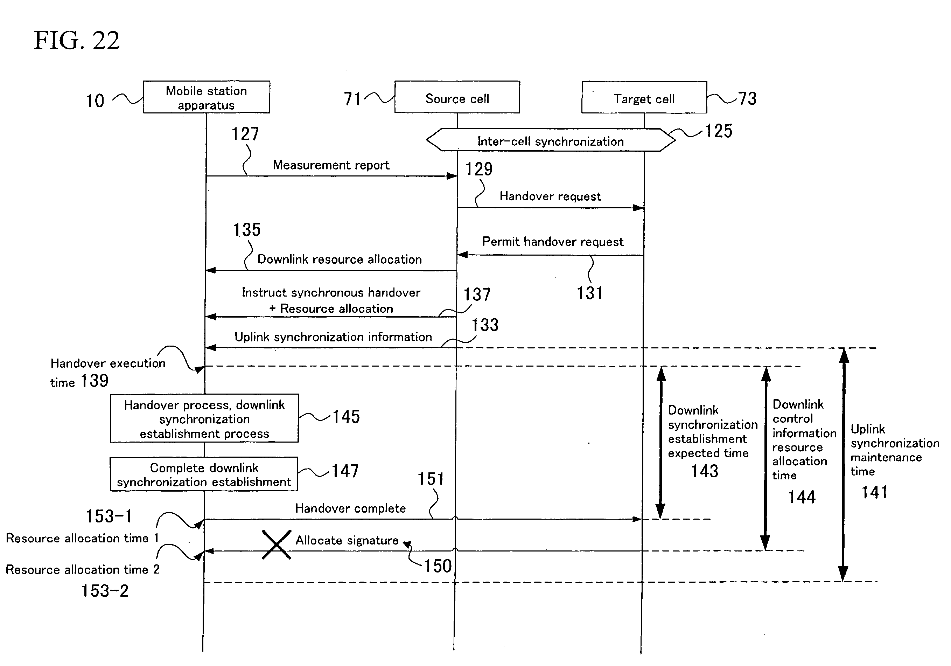

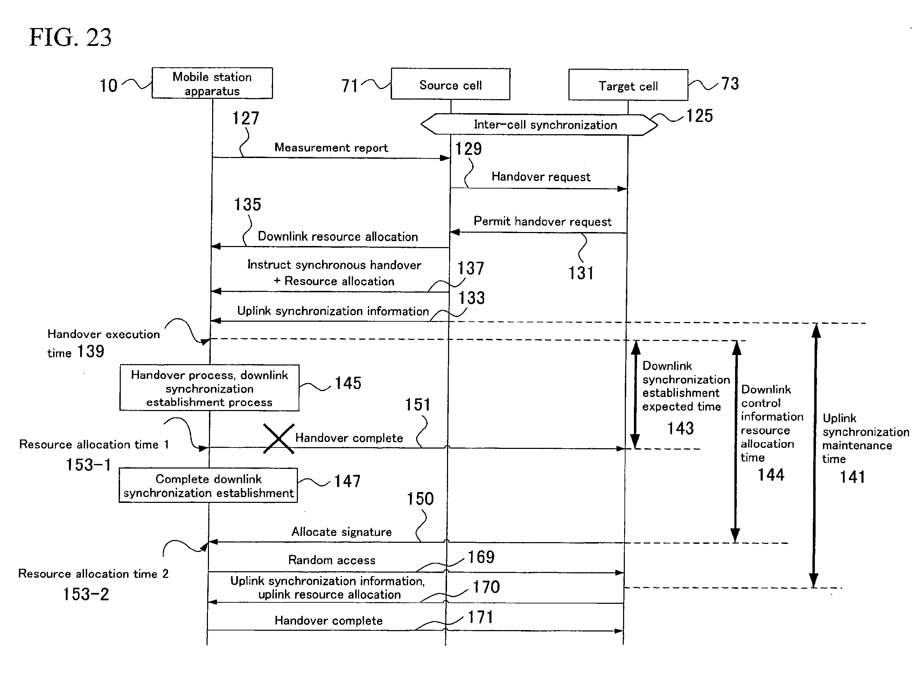

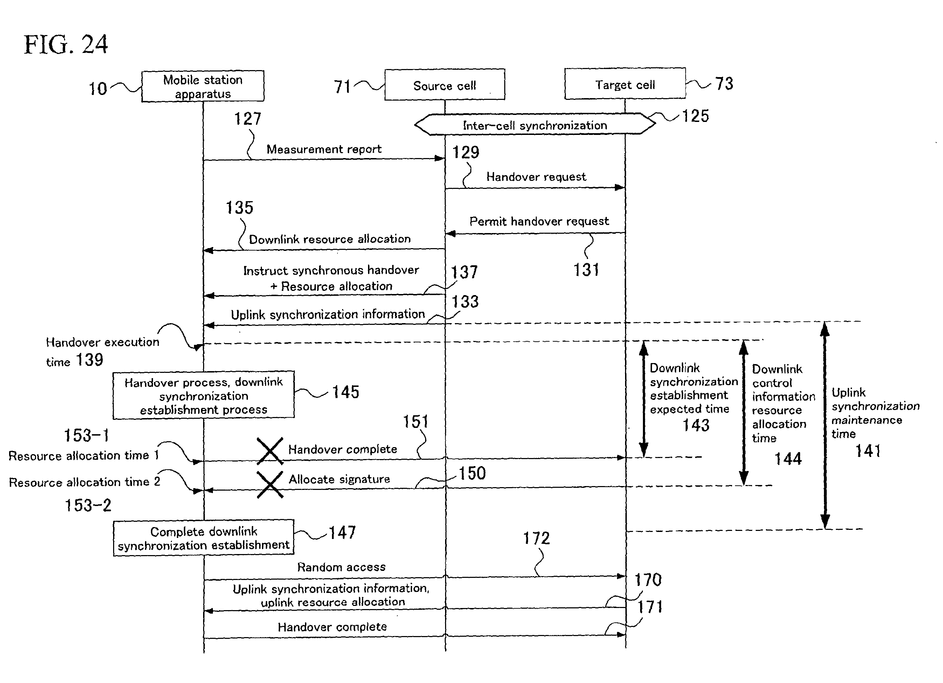

Figure 21 is a sequence diagram for explaining resource allocation notified from the base station apparatus to the mobile station apparatus during the synchronous handover according to the present Example 4. Figure 21 shows a state that the source cell and the target cell are in inter-cell synchronization and that the mobile station apparatus communicates with the source cell. Figures 22, 23, and 24 are sequence diagrams showing handover procedures according to the present Example 4, and depending on the elapsed time to the downlink synchronization establishment. Figures 22, 23, and 24 show a case that a synchronous handover is performed (Figure 22), a case that a handover of contention-free random access transmission is performed (Figure 23), and a case that a handover of contention-based random access transmission is performed (Figure 24).

Figure 21 will be described. The same reference numerals are used for the same controls as in Figure 13. and the description will not be repeated. The source cell 71 and the target cell 73 perform the inter-cell synchronization 125. The mobile station apparatus 10 notifies the source cell 71 of the measurement report message 127 including at least the measurement result of reception quality of the source cell 71 and the target cell 73 or the handover command request. When the source cell 71 determines that the handover to the target cell 73 is necessary based on the content of the measurement report message 127, the source cell 71 notifies the target cell 73 of the necessity of the handover of the mobile station apparatus 1 through the handover request message 129 to request for the preparation of the handover. When the target cell 73 that has received the handover request message 129 determines that the handover can be performed, the target cell notifies the handover request permission message 131 to the source cell 71.

The source cell 71 that has received the handover request permission message 131 notifies the downlink resource allocation message 135 and the synchronous handover instruction message 137 to the mobile station apparatus 10. Either the source cell 71 or the target cell 73 may determine whether the handover is a synchronous handover. The synchronous handover instruction message 137 includes two pieces of resource allocation information related to uplink transmission from the mobile station apparatus 10 after the completion of the handover. The two pieces of resource allocation information indicate uplink resource allocation information for the mobile station apparatus 10 to transmit a handover complete message at the resource allocation time 1 (153-1) and downlink control signal resource allocation information for the mobile station apparatus 10 to receive a downlink control signal for random access transmission at the resource allocation time 2 (153-2).

The actual handover sequence will be described using Figures 22. 23, and 24. In Figures 22 to 24, the same reference numerals are used for the same controls as in Figure 21, and the description will not be repeated.

Figure 22 will be described. From the reception of the synchronous handover instruction message 137 to the start of the downlink synchronization establishment process 145 for the target cell 73 is the same as in Figure 21, and the description will not be repeated. The mobile station apparatus completed with the downlink synchronization establishment compares the time that the downlink synchronization establishment is completed (147) and the temporal relationship between the resource allocation time 1 (153-1) and the resource allocation time 2 (153-2). Here, as shown in Figure 22, if the time that the downlink synchronization establishment is completed is earlier than the times designated by the resource allocation time 1 and the resource allocation time 2, the mobile station apparatus 10 uses the uplink resource designated by the uplink resource allocation information designated at the resource allocation time 1 (153-1) to transmit the handover complete message 151 to the target cell, and the handover procedure is completed. The base station apparatus of the target cell 73 that has received the handover complete message 151 determines that the downlink control signal resource allocation information related to the resource allocation time 2 (153-2) is not necessary and performs reallocation so that another mobile station apparatus can also use the resource.

Figure 23 will be described. From the reception of the synchronous handover instruction message 137 to the start of the downlink synchronization establishment process 145 for the target cell 73 is the same as in Figure 21, and the description will not be repeated. The mobile station apparatus completed with the downlink synchronization establishment compares the time that the downlink synchronization establishment is completed (147) and the temporal relationship between the resource allocation time 1 (153-1) and the resource allocation time 2 (153-2). Here, as shown in Figure 23, if the time that the downlink synchronization establishment is completed is later than the time designated in the resource allocation time 1 and earlier than the time designated in the resource allocation time 2, the mobile station apparatus 10 cannot transmit the handover complete message 151 at the resource allocation time 1 (153-1). In this case, the mobile station apparatus 10 receives the downlink control signal 150 designated by the downlink control signal resource allocation information designated in the resource allocation time 2 (153-2). A signature for contention-free random access transmission is allocated to the downlink control signal 150. The mobile station apparatus 10 performs transmission of the contention-free random access channel 169 using the allocated signature and requests the base station apparatus for the uplink synchronization information and the uplink resource allocation information for transmitting a handover complete message. The base station apparatus of the target cell 73 that has received the random access channel 169 notifies the uplink synchronization information for adjusting the uplink transmission timing of the mobile station apparatus 10 and the uplink resource allocation information for transmitting the handover complete message (170). The mobile station apparatus 10 adjusts the uplink transmission timing based on the information and uses the designated uplink resource to transmit a handover complete message 171 to the target cell 73, and the handover procedure is completed.

Figure 24 will be described. From the reception of the synchronous handover instruction message 1 37 to the start of the downlink synchronization establishment process 145 for the target cell 73 is the same as in Figure 21, and the description will not be repeated. The mobile station apparatus 10 completed with the downlink synchronization establishment compares the time that the downlink synchronization establishment is completed (147) and the temporal relationship between the resource allocation time 1 (153-1) and the resource allocation time 2 (153-2). Here, as shown in Figure 24, if the time that the downlink synchronization establishment is completed is later than the time designated in the resource allocation time 1 and the resource allocation time 2, the mobile station apparatus 10 cannot transmit the handover complete message 151 at the resource allocation time 1 or receive the downlink control signal 150 at the resource allocation time 2. In this case, the mobile station apparatus 10 selects an arbitrary signature to transmit a contention-based random access channel 172 and requests the base station apparatus for the uplink synchronization information and the uplink resource allocation information for transmitting the handover complete message. The base station apparatus of the target cell 73 that has received the random access channel 172 notifies the uplink synchronization information for adjusting the uplink transmission timing of the mobile station apparatus 10 and the uplink resource allocation information for transmitting the handover complete message (170). The mobile station apparatus 10 adjusts the uplink transmission timing based on the information and uses the designated uplink resource to transmit the handover complete message 171 to the target cell 73, and the handover procedure is completed. Although Figures 21 to 24 are examples when the uplink resource allocation information for transmitting the handover complete message at the resource allocation time 1 by the synchronous handover instruction message is included, Figures 21 to 24 can also be applied when the uplink control signal resource allocation information for transmitting the uplink control signal is included. Figures 21 to 24 can also be applied when the downlink control signal resource allocation information for transmitting the downlink control signal is included. Whether the uplink control signal resource allocation information is included or the downlink control signal resource allocation information is included, the main point of the present Example that the time required to complete the downlink synchronization establishment is compared with the resource allocation time 1 and the resource allocation time 2 to determine whether to perform a synchronous handover or perform a handover accompanied by contention-free or contention-based random access transmission is the same. The present invention can also be applied when the messages or the control signals are retransmitted.

The timing of the notification of the uplink synchronization information may be any timing before the handover execution time. The expiration time of the uplink synchronization maintenance time (time that the uplink synchronization is lost) can be set to the point after a predetermined time (for example, 500ms) from the reception of the uplink synchronization information for the last time, and the expiration time may be different from that in Figures 21 to 24.

When the uplink synchronization of the mobile station apparatus is predicted to be lost before the uplink resource allocation time after the completion of the handover, such as when the synchronous handover is performed during the intermittent reception, the source cell can apply an uplink resynchronization request process to the mobile station apparatus and generate uplink synchronization information for uplink resynchronization for the mobile station apparatus. The uplink channel measured by the base station apparatus for the uplink resynchronization request process may be an arbitrary uplink channel. The uplink synchronization information may be included in the downlink resource allocation message or the synchronous handover instruction message before transmission.

According to the present Example, the handover procedure can be executed considering the downlink synchronization establishment expected time and the uplink synchronization maintenance time, and a flexible handover procedure can be provided to the mobile station apparatus. In addition, it is advantageous that the mobile station apparatus can perform a high-speed handover based on the synchronous handover procedure and continue the handover procedure by performing one of the contention-free and contention-based handover procedures even if the synchronous handover cannot be performed by switching the handover procedure. Therefore, the handover success rate can be improved, and the use efficiency of resources improves. Furthermore, the degradation of the speech quality due to a handover failure can be prevented, and the power consumption associated with the cell reselection procedure after the handover failure can be further reduced. In addition, the base station apparatus can set the time of uplink resource allocation independent from the maximum allowable time for the downlink synchronization establishment of the mobile station apparatus within the uplink synchronization maintenance time. Therefore, adaptive scheduling can be performed in accordance with the mobile station apparatus, and the use efficiency of resources improves.

### [Example 5]

Example 5 of the present invention will be described. The present Example illustrates a handover procedure of the mobile station apparatus when the base station apparatus cannot receive the handover complete message. The configuration of the mobile station apparatus of the present Example may be the same as in Figure 9. The configuration of the base station apparatus may be the same as in Figure 3 or Figure 10.

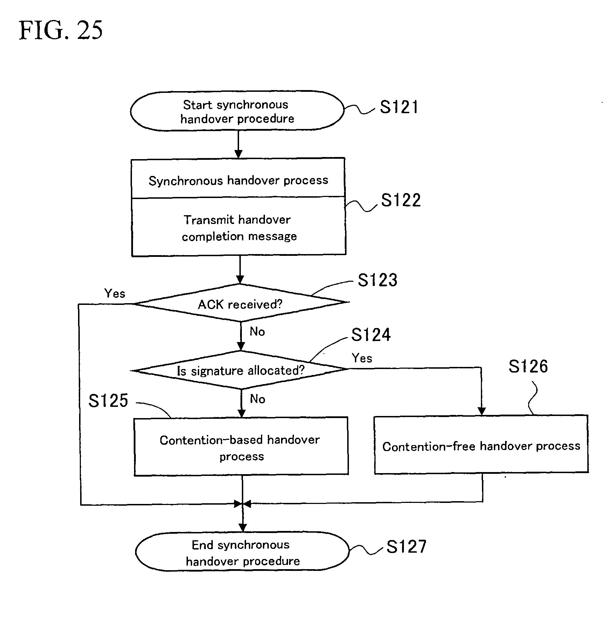

Figure 25 is a diagram showing a flow after the handover is carried out in the communication technique according to the present Example. A procedure of any of Examples 1 to 4 and conventional systems can be used for the control up to the synchronous handover procedure by the mobile station apparatus. The present procedure starts from step S121. In step S122, the synchronous handover procedure is carried out, and the mobile station apparatus completed with the downlink synchronization establishment follows the uplink resource allocation information to use the designated uplink resource and transmits the handover complete message to the base station apparatus of the target cell. The mobile station apparatus waits for notification of reception acknowledgment (ACK, NACK) of the handover complete message from the target cell through the uplink shared control channel, and if ACK is received (Yes in step S123), the mobile station apparatus assumes that the target cell has properly received the handover complete message and ends the synchronous handover procedure (step S127). However, there is a case that ACK cannot be received or NACK is received due to a reason such as degradation of the propagation condition (No in step S123). In this case, the mobile station apparatus uses the random access channel to attempt acquiring new uplink resource information to retransmit the handover complete message. In this case, if the signature to be used is allocated in advance (Yes in step S124), a contention-free handover process is executed using contention-free random access transmission (step S126). If the signature is not allocated (No in step S124), a contention-based handover process is executed using contention-based random access transmission (step S125).

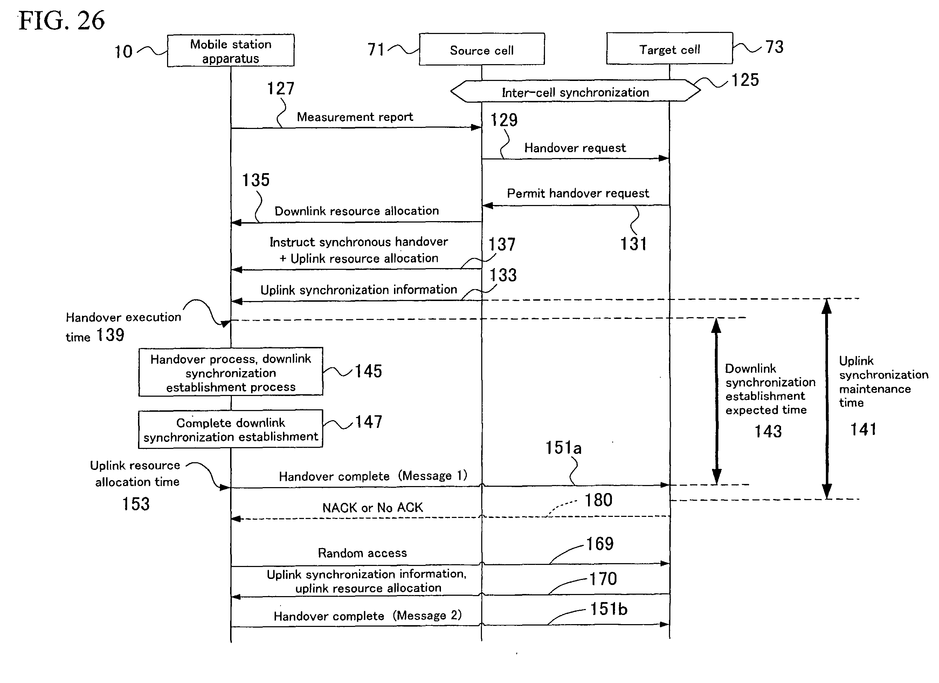

Figure 26 is a sequence diagram showing a handover procedure according to the present Example. Since up to the completion of the downlink synchronization establishment is the same control as in Figure 13, the same reference numerals are used for the same controls as in Figure 13, and the description will not be repeated. The mobile station apparatus 10 completed with the Downlink synchronization establishment compares the time that the Downlink synchronization establishment is completed (147), the time after the downlink synchronization establishment expected time 143 from the handover execution time 139 (thus, uplink transmission time (153) after the handover designated in the uplink resource allocation information), and the time after the uplink synchronization maintenance time 141 from the reception of the uplink synchronization maintenance time 141 after the reception of the uplink synchronization information 133 for the last time (thus, time that the uplink synchronization is assumed to be lost). If the downlink synchronization establishment is completed within the downlink synchronization establishment expected time and within the uplink synchronization maintenance time, the mobile station apparatus 10 uses the uplink resource designated by the uplink resource allocation information included in the synchronous handover instruction message 137 to transmit a handover complete message (message 1) 151a to the target cell 73. If NACK is received from the base station apparatus of the target cell 73 in response to the message 1 or ACK is not received, the mobile station apparatus 10 transmits the random access channel 169 to the target cell 73. In this case, the base station apparatus of the source cell 71 can use the handover instruction message 137 to allocate a signature to the mobile station apparatus 10 in advance to allow the mobile station apparatus 10 to make the transmission of the random access channel 169 after the completion of the downlink synchronization establishment (147) contention-free. The mobile station apparatus 10 then acquires the uplink resource allocation information from the base station apparatus of the target cell 73 and, if necessary, the uplink synchronization information (170) and uses the information to again transmit a handover complete message (message 2) 151b, and the handover procedure ends.

Although Figure 26 is an example that the synchronous handover instruction message 137 includes the uplink resource allocation information for transmitting the handover complete message (message 1) 151a, Figure 26 can also be applied when the uplink control signal resource allocation information for transmitting the uplink control signal is included. Figure 26 can also be applied when the downlink control signal resource allocation information for transmitting the downlink control signal is included. Whether the uplink control signal resource allocation information is included or the downlink control signal resource allocation information is included, the main point of the present Example that the next control is selected according to the reception of a response (ACK/NACK) to the uplink transmission after the handover is the same. The timing of the notification of the uplink synchronization information may be any timing before the handover execution time. The expiration time of the uplink synchronization maintenance time (time that the uplink synchronization is lost) can be set to the point after a predetermined time (for example, 500ms) from the reception of the uplink synchronization information for the last time, and the expiration time may be different from that in Figure 26.

When the uplink synchronization of the mobile station apparatus is predicted to be lost before the uplink resource allocation time after the completion of the handover, such as when the synchronous handover is performed during the intermittent reception, the source cell can carry out an uplink resynchronization request process for the mobile station apparatus and generate uplink synchronization information for uplink resynchronization for the mobile station apparatus. The uplink channel measured by the base station apparatus for the uplink resynchronization request process may be an arbitrary uplink channel. The uplink synchronization information may be included in the downlink resource allocation message or the synchronous handover instruction message before transmission.

According to the present Example, even if there is no response from the base station apparatus in response to the handover complete message after the synchronous handover, the handover procedure can be continued. Therefore, the handover success rate can be improved, and the use efficiency of resources improves. Furthermore, the degradation of the speech quality due to a handover failure can be prevented, and the power consumption associated with the cell reselection procedure after the handover failure can be further reduced.

### [Example 6]

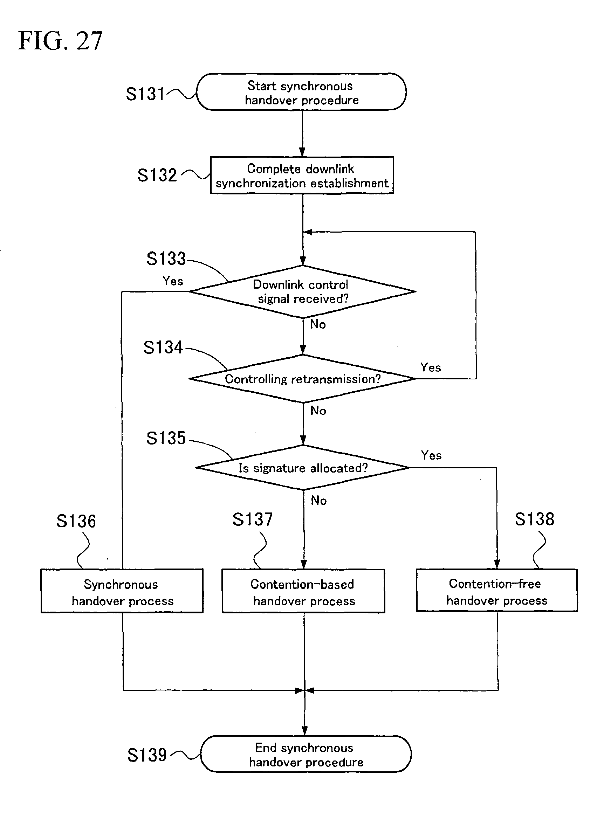

Example 6 of the present invention will be described. The present Example illustrates a handover procedure of the mobile station apparatus when the mobile station apparatus cannot receive the downlink control signal. The configuration of the mobile station apparatus of the present Example may be the same as in Figure 9. The configuration of the base station apparatus may be the same as in Figure 3 or Figure 10. Figure 27 is a diagram showing a flow of a handover procedure after the downlink synchronization establishment of the mobile station apparatus in a communication technique according to the present Example. Any procedure of Examples 1 to 4 and conventional systems can be used for the control up to the synchronous handover procedure by the mobile station apparatus. However, the synchronous handover instruction message is handled only when the downlink control signal resource allocation information is included. The present procedure starts from step S131. The mobile station apparatus, having carried out the synchronous handover procedure and completed the downlink synchronization establishment in step S132, executes a reception process of the downlink control signal designated in the downlink control signal resource allocation information (step S133). If the reception is successful (Yes in step S133), the mobile station apparatus executes a synchronous handover process (step S136).

However, due to a reason such as the degradation of the propagation condition, the downlink control signal cannot be received in some cases (No in step S133). In this case, the mobile station apparatus continues attempting to receive the downlink control signal during the intervals that the downlink control signal is retransmitted (Yes in step S134) and executes a synchronous handover process if the reception has been successful even once. However, if the downlink control signal cannot be received as a result of the retransmission control (No in step S134), the mobile station apparatus attempts acquiring new uplink resource information using the random access channel to retransmit the handover complete message. In this case, if a signature is allocated to the handover instruction message (Yes in step S135), the mobile station apparatus executes a contention-free handover process using contention-free random access transmission (step S138). If a signature is not allocated (No in step S 135), the mobile station apparatus executes a contention-based handover process using contention-based random access transmission (step S137). The control flow after the transmission of the handover complete message may be the same as in Figure 25.

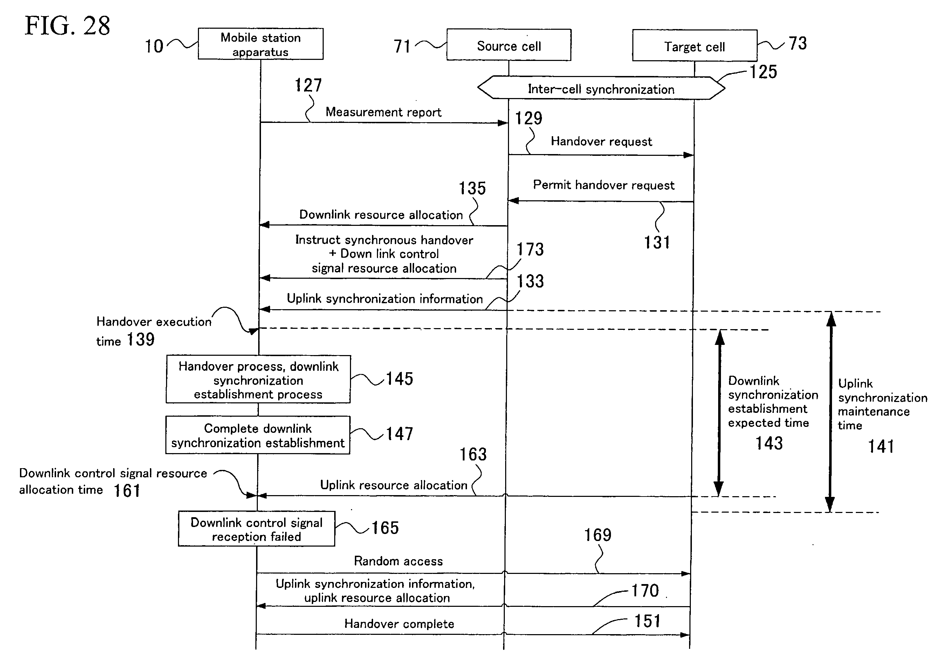

Figure 28 is a sequence diagram showing a handover procedure according to the present Example. Since up to the reception of the handover request permission message 131 by the source cell 71 is the same as in Figure 13, the same reference numerals are used for the same controls as in Figure 13, and the description will not be repeated. The source cell 71 that has received the handover request permission message 131 notifies the downlink resource allocation message 135 and a synchronous handover instruction message 173 to the mobile station apparatus 10. Either the source cell 71 or the target cell 73 may determine whether the handover is a synchronous handover. The synchronous handover instruction message 173 includes downlink control signal resource allocation information indicating resource information for the transmission of uplink source allocation 163. As the mobile station apparatus 10 receives the message, a synchronous handover process is carried out. When the synchronous handover instruction message 173 includes a handover execution time, the mobile station apparatus 10 performs the handover in the handover execution time 139. Immediate execution may be designated as the handover execution time. The mobile station apparatus 10 switches control parameters of the radio frequency and the transmitting/receiving circuit at the handover execution time and then executes a downlink synchronization establishment process for establishing the dow-nlink wireless synchronization with the target cell 73 (145). The parameters for the Downlink synchronization establishment process are included in the synchronous handover instruction message 173 or reported or notified by the source cell 71 in advance. Furthermore, if the uplink synchronization information 133 for adjusting the gap in the uplink transmission timing of the mobile station apparatus is notified from the source cell 71 in parallel with the handover procedure, the mobile station apparatus 10 calculates the uplink synchronization maintenance time 141 that is an interval that the uplink synchronization establishment is secured and performs timekeeping.

The mobile station apparatus completed with the downlink synchronization establishment (147) compares the time that the downlink synchronization establishment is completed and the time after the downlink synchronization establishment expected time 143 from the handover execution time (thus, transmission time 161 of the uplink control signal 163 designated in the downlink control signal resource allocation information). If the Downlink synchronization establishment is completed within the downlink synchronization establishment expected time, the mobile station apparatus attempts receiving the uplink control signal 163 designated by the downlink control signal resource allocation information included in the synchronous handover instruction message 173. In this case, if the mobile station apparatus cannot receive the uplink control signal 163 influenced by temporary degradation in radio quality and the like, the mobile station apparatus determiners that the downlink control signal reception has failed and transmits the random access channel 169 to the target cell 73. In this case, the base station apparatus of the source cell 71 can use the handover instruction message 173 to allocate a signature to the mobile station apparatus 10 in advance to allow the mobile station apparatus 10 to make the random access transmission after the completion of the downlink synchronization establishment contention-free. The mobile station apparatus 10 then acquires the uplink resource allocation information, and if necessary, the uplink synchronization information from the base station apparatus through the uplink control channel 170 and uses the information to again transmit the handover complete message 151, and the handover procedure ends.

The timing of the notification of the uplink synchronization information may be any timing before the handover execution time. The expiration time of the uplink synchronization maintenance time (time that the uplink synchronization is lost) may be set to the point after a predetermined time (for example, 500ms) from the reception of the uplink synchronization information for the last time and may be different from that in Figure 28.

If the uplink synchronization of the mobile station apparatus is predicted to be lost before the uplink resource allocation time after the completion of the handover, such as when the synchronous handover is performed during the intermittent reception, the source cell can execute the uplink resynchronization request process for the mobile station apparatus to generate uplink synchronization information for uplink resynchronization for the mobile station apparatus. The uplink channel measured by the base station apparatus for the uplink resynchronization request process may be an arbitrary uplink channel. The uplink synchronization information may be included in the downlink resource allocation message or the synchronous handover instruction message before transmission.

According to the present Example, the mobile station apparatus can continue the handover procedure even if the reception of the downlink control signal fails after the handover. Therefore, the handover success rate can be improved, and the use efficiency of resources improves. The degradation of the speech quality due to a handover failure can be prevented, and the power consumption associated with the cell reselection procedure after the handover failure can be further reduced.

In the above described Examples, a program for realizing the functions of the components or part of the functions of the mobile station apparatus and the base station apparatus may be recorded in a computer-readable recording medium, and a computer system may read out and execute the program recorded in the recording medium to control the mobile station apparatus and the base station apparatus. A configuration may be adopted in which the program is acquired from a transmission medium. The "computer system" herein includes hardware such as an OS and a peripheral device.

The "computer-readable recording medium" denotes a portable medium, such as a flexible disk, a magneto-optical disk, a ROM, and a CD-ROM, or a storage device, such as a hard disk, included in the computer system.

Furthermore, the "computer-readable recording medium" includes a medium that dynamically holds the program for a short time, such as a communication wire when the program is transmitted through a communication line (transmission medium) of a network of the Internet or the like, a telephone line, or the like and includes a medium that holds the program for a certain time such as a volatile memory inside the computer system serving as a server or a client in this case. The program may realize part of the functions or may realize the functions in combination with a program already recorded in the computer system.

Although Examples of the invention have been described in detail with reference to the drawings, the specific configuration is not limited to Examples, and designs and the like without departing from the scope of the invention are also included in the claims.

As described, according to the present Examples, an optimal handover procedure can be selected by comparing the time to the downlink synchronization establishment and the uplink resource allocation time in a synchronous handover procedure, and the present Examples have an advantage that the handover performance improves.

### Industrial Applicability

The present invention can be used for a communication apparatus. The present invention can also be used in forms of synchronous handover methods of a base station apparatus and a mobile station apparatus as well as a base station apparatus, a mobile station apparatus, a mobile communication system, a program, and a recording medium realizing the methods.

## Claims

1. A mobile station apparatus in a mobile communication system comprising: a base station apparatus; and the mobile station apparatus, wherein
when a handover for switching a wirelessly connected base station apparatus is performed while uplink transmission timing of the mobile station apparatus is maintained, the mobile station apparatus performs a handover by selecting a procedure from a first handover procedure that transmits a random access channel to a handover target base station apparatus and a second handover procedure that does not require the transmission of the random access channel based on the time required to establish downlink synchronization with the handover target base station apparatus and not less than one control time information transmitted from a handover source base station apparatus.

2. The mobile station apparatus according to claim 1 wherein
the control time information is an uplink resource allocation time designated in advance, the first handover procedure is selected when the time that the downlink synchronization is established between the handover target base station apparatus and the mobile station apparatus is after the time designated by the control time information, and the second handover procedure is selected when the time that the downlink synchronization is established between the handover target base station apparatus and the mobile station apparatus is not after the time designated by the control time information.

3. The mobile station apparatus according to claim 1 wherein
the control time information is an uplink resource allocation time and a maintenance time of uplink transmission timing designated in advance, the first handover procedure is selected when the time that the downlink synchronization is established between the handover target base station apparatus and the mobile station apparatus is after one of the times designated by the control time information, and the second handover procedure is selected when the time that the downlink synchronization is established between the handover target base station apparatus and the mobile station apparatus is not after the times designated by the control time information.

4. The mobile station apparatus according to claim 2 or 3 wherein
in the first handover procedure, the mobile station apparatus transmits the random access channel using a signature if the signature is allocated in advance by the handover source base station apparatus and transmits the random access channel using an arbitrary signature if the signature is not allocated.

5. The mobile station apparatus according to claim 1 wherein
the mobile station apparatus compares a time that a handover instruction message is received and a handover execution time designated in the handover instruction message, determines that a start time of the first or second handover procedure is immediate execution if the received time is within a predetermine time from the handover execution time, and determines that the start time of the first or second handover procedure is a next handover execution time if the received time is beyond the predetermined time from the handover execution time.

6. A base station apparatus in a mobile communication system comprising: a base station apparatus; and a mobile station apparatus, wherein
whether to perform a handover of switching the wirelessly connected base station apparatus while maintaining uplink transmission timing of the mobile station apparatus is determined based on a state of the mobile station apparatus and a state of an uplink resource of the handover target base station apparatus.

7. The base station apparatus according to claim 6 wherein
when instructing the handover of switching the wirelessly connected base station apparatus while maintaining the uplink transmission timing of the mobile station apparatus, the base station apparatus sets not less than one control time information to a handover instruction message based on the state of the mobile station apparatus and the state of an uplink resource of the handover target base station apparatus.

8. A mobile communication system including the mobile station apparatus according to any one of claims 1 to 5.

9. A mobile communication system including the base station apparatus according to claim 6 or 7.

10. A control method in a mobile station apparatus included in a mobile communication system comprising: a base station apparatus; and a mobile station apparatus, the control method comprising:
when performing a handover of switching a wirelessly connected base station apparatus while maintaining uplink transmission timing with a handover source base station apparatus, a step of performing a handover by selecting a procedure from a first handover procedure that transmits a random access channel to a handover target base station apparatus and a second handover procedure that does not require the transmission of the random access channel based on the time required to establish downlink synchronization with the handover target base station apparatus.

11. A mobile communication system comprising: a base station apparatus; and a mobile station apparatus, the mobile station apparatus comprising:
a handover management unit that compares a time at the completion of downlink synchronization establishment and an uplink resource allocation time allocated in advance; and a handover control unit that performs a first handover procedure that transmits a random access channel if the time at the completion of the downlink synchronization establishment is later than the uplink resource allocation time and that performs a second handover procedure that does not require the transmission of the random access channel if the time at the completion of the downlink synchronization establishment is before the uplink resource allocation time, and the base station apparatus comprising:
a base station handover management unit that determines the possibility of execution of the second handover procedure; and a base station handover control unit that switches the first handover and the second handover procedures in accordance with the base station handover management unit.

12. A mobile communication system comprising: a base station apparatus; and a mobile station apparatus, the mobile station apparatus comprising:
a handover management unit that compares a time at the completion of downlink synchronization establishment, an uplink resource allocation time allocated in advance, and an uplink synchronization maintenance time; and a handover control unit that performs a first handover procedure that transmits a random access channel if the time at the completion of the downlink synchronization establishment is later than the uplink resource allocation time or the uplink synchronization maintenance time and that performs a second handover procedure that does not require the transmission of the random access channel if the time at the completion of the downlink synchronization establishment is before the uplink resource allocation time and the uplink synchronization maintenance time, and the base station apparatus comprising:
a base station handover management unit that determines the possibility of execution of the second handover procedure; and a base station handover control unit that switches the first handover procedure and the second handover procedure in accordance with the base station handover management unit.

13. A mobile communication system comprising: a base station apparatus; and a mobile station apparatus, the mobile station apparatus comprising:
a handover management unit that determines a handover execution time by comparing a handover execution time and a reception time of a handover instruction message and that compares a time at the completion of downlink synchronization establishment, an uplink resource allocation time allocated in advance, and an uplink synchronization maintenance time; and a handover control unit that performs a first handover procedure that transmits a random access channel if the time at the completion of the downlink synchronization establishment is later than the uplink resource allocation time or the uplink synchronization maintenance time and that performs a second handover procedure that does not require the transmission of the random access channel if the time at the completion of the downlink synchronization establishment is before the uplink resource allocation time and the uplink synchronization maintenance time, and the base station apparatus comprising:
a base station handover management unit that determines the possibility of execution of the second handover procedure; and a base station handover control unit that switches the first handover procedure and the second handover procedure in accordance with the base station handover management unit.

14. A mobile station apparatus in a mobile communication system comprising: a base station apparatus; and the mobile station apparatus, wherein
when a handover for switching a wirelessly connected base station apparatus is performed while uplink transmission timing of the mobile station apparatus is maintained, the mobile station apparatus performs a handover by selecting a procedure from a first handover procedure that transmits a contention-free random access channel to a handover target base station apparatus, a second hanover procedure that transmits a contention-based random access channel, and a third handover procedure that does not require the transmission of the random access channel based on the time required to establish downlink synchronization with the handover target base station apparatus and first and second resource allocation time information transmitted from a handover source base station apparatus.

15. A base station apparatus in a mobile communication system comprising: the base station apparatus; and a mobile station apparatus, wherein
when instructing a handover for switching a wirelessly connected base station apparatus while maintaining uplink transmission timing of the mobile station apparatus, the base station apparatus sets, in a handover instruction message, control time information indicating an uplink resource allocation time and an allocation time of a downlink control signal for notifying a signature based on a state of the mobile station apparatus and a state of an uplink resource of the handover target base station apparatus.

16. A control method in a mobile station apparatus included in a mobile communication system comprising: a base station apparatus; and the mobile station apparatus, the control method comprising:
when performing a handover of switching a wirelessly connected base station apparatus while maintaining uplink transmission timing with a handover source base station apparatus, a step of performing a handover by selecting a procedure from a first handover procedure that transmits a contention-free random access channel to a hanover target base station apparatus, a second handover procedure that transmits a contention-based random access channel, and a third handover procedure that does not require the transmission of a random access channel based on the time required to establish downlink synchronization with the handover target base station apparatus.

17. A mobile communication system comprising: a base station apparatus; and a mobile station apparatus, the mobile station apparatus comprising:
a handover management unit that compares a time at the completion of downlink synchronization establishment and an uplink resource allocation time allocated in advance; and a handover control unit that performs a first handover that transmits a contention-free random access channel and a second handover that transmits a contention-based random access channel if the time at the completion of the downlink synchronization establishment is after first and second uplink resource allocation times, respectively, and that performs a third handover that does not require the transmission of a random access channel if the time at the completion of the downlink synchronization establishment is before the uplink resource allocation times, and the base station apparatus comprising:
a base station handover management unit that determines the possibility of execution of the third handover; and a base station handover control unit that switches the first and second handovers and the third handover in accordance with the base station handover management unit.

18. A mobile station apparatus in a mobile communication system comprising: a base station apparatus; and the mobile station apparatus, wherein
when a handover for switching a wirelessly connected base station apparatus is performed while uplink transmission timing of the mobile station apparatus is maintained, the mobile station apparatus performs a handover by selecting a procedure from a first handover procedure that transmits a random access channel to a handover target base station apparatus and a second handover procedure that does not require the transmission of the random access channel based on a time required to establish downlink synchronization with the handover target base station apparatus and not less than one control time information transmitted from a handover source base station apparatus using a handover instruction message, switches the handover procedure to the first handover procedure if there is no confirmation of reception from the handover target base station apparatus in response to the transmission of a handover complete message based on the second handover procedure, and performs the first handover procedure.

19. A control method in a mobile station apparatus included in a mobile communication system comprising: a base station apparatus; and the mobile station apparatus, the control method comprising:
when performing a handover of switching a wirelessly connected base station apparatus while maintaining uplink transmission timing with a handover source base station apparatus, a step of performing a handover by selecting a procedure from a first handover procedure that transmits a random access channel to a handover target base station apparatus and a second handover procedure that does not require the transmission of the random access channel based on a time required to establish downlink synchronization with the handover target base station apparatus; and a step of switching the handover procedure to the first handover procedure if there is no confirmation of reception from the handover target base station apparatus in response to the transmission of a handover complete message based on the second handover procedure and performing the first handover procedure.

20. A mobile communication system comprising: a base station apparatus; and a mobile station apparatus, the mobile station apparatus comprising:
a handover management unit that compares a time at the completion of downlink synchronization establishment and an uplink resource allocation time allocated in advance; and a handover control unit that performs a first handover procedure that transmits a random access channel if the time at the completion of the downlink synchronization establishment is after the uplink resource allocation time, performs a second handover procedure that does not require the transmission of the random access channel if the time at the completion of the downlink synchronization establishment is before the uplink resource allocation time, and switches the handover procedure to the first handover procedure if there is no confirmation of reception from the handover target base station apparatus in response to the transmission of a handover complete message based on the second handover procedure to perform the first handover procedure, and the base station apparatus comprising:
a base station handover management unit that determines the possibility of execution of the second handover; and a base station handover control unit that switches the first handover procedure and the second handover procedure in accordance with the base station handover management unit.

21. A mobile station apparatus in a mobile communication system comprising: a base station apparatus; and the mobile station apparatus, wherein
when a handover for switching a wirelessly connected base station apparatus is performed while uplink transmission timing of the mobile station apparatus is maintained, the mobile station apparatus performs a handover by selecting a procedure from a first handover procedure that transmits a random access channel to a handover target base station apparatus and a second handover procedure that does not require the transmission of the random access channel based on a time required to establish downlink synchronization with the handover target base station apparatus and not less than one control time information transmitted from a handover source base station apparatus using a handover instruction message, switches the handover procedure to the first handover procedure if the reception of a downlink control signal based on the second handover procedure fails after the downlink synchronization establishment with the handover target base station apparatus is completed, and performs the first handover procedure.

22. A control method in a mobile station apparatus included in a mobile communication system comprising: a base station apparatus; and the mobile station apparatus, the control method comprising:
when performing a handover of switching a wirelessly connected base station apparatus while maintaining uplink transmission timing with a handover source base station apparatus, a step of performing a handover by selecting a procedure from a first handover procedure that transmits a random access channel to a handover target base station apparatus and a second handover procedure that does not require the transmission of the random access channel based on a time required to establish downlink synchronization with the handover target base station apparatus, wherein
the handover procedure is switched to the first handover procedure if the reception of a downlink control signal based on the second handover procedure fails after the downlink synchronization establishment with the handover target base station apparatus is completed, and the first handover procedure is executed.

23. A mobile communication system comprising: a base station apparatus; and a mobile station apparatus, the mobile station apparatus comprising:
a handover management unit that compares a time at the completion of downlink synchronization establishment and an uplink resource allocation time allocated in advance; and a handover control unit that performs a first handover procedure that transmits a random access channel if the time at the completion of the downlink synchronization establishment is after the uplink resource allocation time, performs a second handover procedure that does not require the transmission of the random access channel if the time at the completion of the downlink synchronization establishment is before the uplink resource allocation time, and switches the handover procedure to the first handover procedure if the reception of a downlink control signal based on the second handover procedure fails after the completion of the downlink synchronization establishment with the base station apparatus after the handover to perform the first handover procedure, and the base station apparatus comprising:
a base station handover management unit that determines the possibility of execution of the second handover procedure; and a base station handover control unit that switches the first handover procedure and the second handover procedure in accordance with the base station handover management unit.
